# EUROPEAN PATENT APPLICATION

(11) **EP 3 135 942 A1**
(43) Date of publication of application: **01.03.2017**
(21) Application number: 15783088.6
(22) Date of filing: 06.04.2015
(51) Int. Cl.: F16D 13/71, F16D 13/70

(54) **CLUTCH DEVICE**

(30) Priority: 22.04.2014 JP 2014088599; 25.11.2014 JP 2014238274
(71) Applicant: Aisin Seiki Kabushiki Kaisha, Kariya-shi, Aichi 448-8650 (JP)
(72) Inventor: YAMADA, Hiroyuki, Kariya-shi Aichi 448-8650 (JP); KUSUNOSE, Kazumasa, Kariya-shi Aichi 448-8650 (JP); YAMASAKI, Shoichi, Kariya-shi Aichi 448-8650 (JP); SHIOZAKI, Taro, Kariya-shi Aichi 448-8650 (JP)
(74) Representative: Kramer Barske Schmidtchen Patentanwälte PartG mbB
(86) International application number: PCT/JP2015/060746
(87) International publication number: WO 2015/163128

(57) **Abstract**

A clutch device includes a first elastic member, a cover, and one second elastic member. The cover covers a first member and rotates integrally with the first member. The first elastic member generates elastic force to press the first member and a second member against each other. The second elastic member is provided between the first member and the cover and generates elastic force against force of the first elastic member to a third member.

## Description

### TECHNICAL FIELD

The present invention relates to a clutch device.

### BACKGROUND ART

Conventionally, a known clutch device includes an elastic member to supplement operation force for disconnecting a clutch (for example, refer to Patent Document 1). The clutch device according to Patent Document 1 includes multiple elastic members to obtain the characteristic of supplementary force in accordance with the stroke (position) of an operation unit.

Patent Document 1: Japanese Patent Application Laid-open No. 2013-190036

### DISCLOSURE OF INVENTION

### PROBLEM TO BE SOLVED BY THE INVENTION

It is desirable to attain such a clutch device of a novel structure, for example, a simpler structure with fewer disadvantages.

### MEANS FOR SOLVING PROBLEM

A clutch device according to embodiments comprises a first member rotatably provided about a rotation center; a second member rotatably provided about the rotation center and switchably placed in a transmitting state and a disconnected state, the transmitting state in which the second member is pressed against the first member at least in an axial direction of the rotation center to transmit torque between the first and second members by friction, the disconnected state in which no torque is transmitted between the first member and the second member; a third member provided to be able to transmit force to the second member in the axial direction and movable in the axial direction between a first position and a second position, the first position at which the first member and the second member are placed in the transmitting state, the second position at which the first member and the second member are placed in the disconnected state; a cover that covers the first member and rotates integrally with the first member; a first elastic member configured to elastically deform in the axial direction in accordance with a change in the axial position of the third member and generate elastic force in a direction to press the first member and second member against each other; and a single second elastic member provided between the first member and the cover to elastically deform in the axial direction in accordance with a change in the axial position of the third member and generate elastic force against force of the first elastic member to the third member when the third member moves from the first position toward the second position. Thus, the clutch device can be more simplified in structure than the clutch device including multiple second elastic members according to Patent Document 1.

The clutch device further comprises, for example, a fourth member including a first support and a second support, the first support configured to support the second elastic member in the axial direction when the second elastic member is elastically deformed in a first posture and not to support the second elastic member when the second elastic member is elastically deformed in a second posture, the second support configured to support the second elastic member in the axial direction when at least the second elastic member is in the second posture. In the clutch device according to the present embodiment, the supporting part (state or position of support) of the fourth member for the second elastic member is changed in accordance with a change in the posture of the second elastic member along with the motion of the third member. By the change of the supporting part, the amount of change in the elastic force of the second elastic member relative to the amount of change in the position of the third member varies. In other words, with a relatively simple configuration, the clutch device according to the present embodiment attains, for example, such a characteristic that the amount of change in the elastic force of the second elastic member relative to the amount of change in the position of the third member varies with the position of the third member.

In the clutch device, for example, the second elastic member takes the first posture in a first movement interval of the third member, and takes a second posture in a second movement interval closer to the second position than the first movement interval, and an amount of change in the elastic force of the second elastic member relative to an amount of change in the axial position of the third member in the first movement interval is larger than the amount of change in the elastic force of the second elastic member relative to the amount of change in the axial position of the third member in the second movement interval. In other words, the amount of change in the elastic force of the second elastic member relative to the amount of change in the axial position of the third member is smaller in the second movement interval in which the first member and the second member are in a slipping state (half-clutch state) near the disconnected state than in the first movement interval in which the first member and the second member are in the transmitting state. This results in a smaller change in an operation force for moving the third member in the axial direction in the slipping state.

In the clutch device, for example, the fourth member is provided between the third member and the second member to be rotatable about the rotation center and movable in the axial direction, and the second elastic member is positioned opposite the second member with respect to the fourth member in the axial direction.
This achieves a relatively simple configuration that the supporting part of the fourth member for the second elastic member is changed in accordance with a change in the posture of the second elastic member along with the motion of the third member.

The clutch device further comprises, for example, a fifth member including a first contact to contact with the first elastic member and a second contact to contact with the second elastic member, the fifth member being provided between the first elastic member and the second elastic member to move in the axial direction along with an axial motion of the third member, wherein the second elastic member is provided between the fifth member and the second member. With this configuration, the fifth member can be used as a transmission path of force from the third member to the second member, a transmission path of the elastic force of the first elastic member, and a transmission path of the elastic force of the second elastic member. This can achieve a relatively simple configuration including the third member, the first elastic member, and the second elastic member.

In the clutch device, for example, the fourth member is positioned outside the third member and the second member and provided to be rotatable about the rotation center and movable in the axial direction, and the second elastic member is positioned on the same side of the fourth member as the second member. Thus, the clutch device as a twin clutch with a relatively simple configuration can be attained.

The clutch device further comprises, for example, a fifth member including a first contact to contact with the first elastic member and a second contact to contact with the second elastic member, the fifth member being provided between the first elastic member and the second elastic member and configured to move in the axial direction along with an axial motion of the third member, wherein the second elastic member is positioned outside the fifth member and the second member. Thus, the clutch device as a twin clutch with a relatively simple configuration can be attained.

In the clutch device, for example, the second elastic member is a disc spring of a circular shape about the rotation center. Thus, the second elastic member with a relatively simple configuration can be attained.

In the clutch device, for example, the second elastic member includes a disc spring of a circular shape about the rotation center, and a plate spring extending from the disc spring in a radial direction of the rotation center. With this configuration, the degree of freedom for setting the elastic force of the second elastic member is higher than the second elastic member including only a disc spring.

In the clutch device, for example, the plate spring includes a first plate extending from the disc spring in the radial direction of the rotation center, and a second plate extending from the first plate in a circumferential direction of the rotation center. With this configuration, the length of the plate spring in the radial direction of the rotation center can be reduced from that of the entire plate spring extending in the radial direction of the rotation center.

In the clutch device, for example, the first support has a circular shape about the rotation center. With this configuration, for example, the second elastic member can be more stably supported.

The clutch device further comprises, for example, a third elastic member different from the second elastic member, configured to generate elastic force against force of the first elastic member to the third member in the disconnected state. With this configuration, for example, in the disconnected state, the third member can be applied with elastic force against force of the first elastic member. Such a third elastic member has been known as a strap 24a disclosed in Patent Document 2 in Patent Document 1, but the elastic force thereof is smaller than the elastic forces of the first and second elastic members.

The clutch device comprises, for example, a sixth member provided between the first elastic member and the second elastic member and configured to move in the axial direction integrally with the third member; and a seventh member provided between the sixth member and the second member, and configured to be in contact with the sixth member in the axial direction when the third member is located at the first position, and to be separated from the sixth member in the axial direction when the third member is located between the first position and the second position. With this configuration, for example, the elastic force of the first elastic member can be reduced.

### BRIEF DESCRIPTION OF DRAWINGS

FIG. 1 is a sectional view of a clutch device according to a first embodiment;
FIG. 2 is a sectional view of part of the clutch device according to the first embodiment when the clutch device is in a transmitting state;
FIG. 3 is a sectional view of the part of the clutch device according to the first embodiment when the clutch device is in a slipping state;
FIG. 4 is a sectional view of the part of the clutch device according to the first embodiment when the clutch device starts disconnected;
FIG. 5 is a sectional view of the part of the clutch device according to the first embodiment when the clutch device is in a disconnected state;
FIG. 6 is a graph showing a relation between the position of a third member and force generated by each elastic member in the clutch device according to the first embodiment;
FIG. 7 is a sectional view of a clutch device according to a second embodiment;
FIG. 8 is a sectional view of part of a second elastic member in the clutch device according to the second embodiment when viewed in an axial direction;
FIG. 9 is a sectional view of part of the clutch device according to the second embodiment, corresponding to the IX-IX section in FIG. 8;
FIG. 10 is a diagram illustrating a plate spring of the second elastic member when viewed from the arrow E in FIG. 8;
FIG. 11 is a sectional view of a clutch device according to a third embodiment;
FIG. 12 is a sectional view of part of the clutch device according to the third embodiment;
FIG. 13 is a diagram illustrating part of the second elastic member in a clutch device according to a fourth embodiment when viewed in the axial direction;
FIG. 14 is a sectional view of part of the clutch device according to the fourth embodiment, corresponding to the XIV-XIV section in FIG. 13;
FIG. 15 is a diagram illustrating part of the second elastic member in a clutch device according to a fifth embodiment when viewed in the axial direction;
FIG. 16 is a sectional view of part of the clutch device according to the fifth embodiment, corresponding to the XVI-XVI section in FIG. 15;
FIG. 17 is a sectional view of a clutch device according to a sixth embodiment;
FIG. 18 is a sectional view of a clutch device according to a seventh embodiment;
FIG. 19 is a sectional view of part of the clutch device according to the seventh embodiment when the clutch device is in the transmitting state;
FIG. 20 is a sectional view of the part of the clutch device according to the seventh embodiment when the clutch device is in the slipping state;
FIG. 21 is a sectional view of the part of the clutch device according to the seventh embodiment when the clutch device is in the disconnected state;
FIG. 22 is a graph showing a relation between the position of the third member and force generated by each elastic member in the clutch device according to the seventh embodiment;
FIG. 23 is a sectional view of a clutch device according to an eighth embodiment;
FIG. 24 is a sectional view of a clutch device according to a ninth embodiment;
FIG. 25 is a sectional view of part of the clutch device according to the ninth embodiment when the clutch device is in the transmitting state;
FIG. 26 is a sectional view of the part of the clutch device according to the ninth embodiment when the clutch device is in the slipping state;
FIG. 27 is a sectional view of the part of the clutch device according to the ninth embodiment when the clutch device is in the disconnected state;
FIG. 28 is an explanatory diagram of variation in elastic force of each elastic member according to the ninth embodiment; and
FIG. 29 is a sectional view of a clutch device according to a tenth embodiment.

### BEST MODES FOR CARRYING OUT THE INVENTION

Exemplary embodiments of the present invention will be disclosed below. Configurations according to the embodiments described below, and functions and results (effects) achieved by these configurations are merely exemplary. The present invention can achieve any configuration other than the configurations disclosed in the embodiments below. The present invention can attain at least one of various kinds of effects (including secondary effects) obtained with the configurations.

Embodiments below include same or like components. Same or like components are denoted by common reference numerals, and duplicate description thereof will be omitted. In the following, unless otherwise stated, an axial direction is the axial direction of a rotation center Ax (rotation axis), a radial direction is the radial direction of the rotation center Ax, and a circumferential direction is the circumferential direction of the rotation center Ax. In each drawing, arrow X indicates the other axial side, and arrow R indicates radial outside (a side farther away from the rotation center Ax or a radial direction).

### First Embodiment

A clutch device 1 according to the present embodiment is positioned between an engine (power device; not illustrated) and a transmission (speed gear; not illustrated). In place of the position between the engine and the transmission, the clutch device 1 may be provided at other positions, and provided in various kinds of vehicles (for example, hybrid automobiles) or a machine including a rotational element.

In the present embodiment, the clutch device 1 is a so-called single clutch including one rotation transmitting unit 2. Movable units (members 14 and 23, and bearing 22, for example) are moved in the axial direction by an actuator (not illustrated) controlled by an ECU (not illustrated) so as to switchably place the clutch device 1 in a transmitting state in which rotation (torque) is transmitted through the rotation transmitting unit 2, and a disconnected state in which the rotation transmission through the rotation transmitting unit 2 is interrupted. The rotation transmitting unit 2 can change torque transmitted between a member 10 (for example, a flywheel) and a member 12 (shaft 100). The member 10 is one of torque inputting and outputting members, and the shaft 100 (the member 12) is the other. The member 10 is connected (coupled or fixed) with a crankshaft (not illustrated) of the engine, and the shaft 100 is connected (coupled or fixed) with a rotational part of the transmission. The rotation transmitting unit 2 can transmit rotation also in a so-called half-clutch state in which output torque is smaller than input torque.

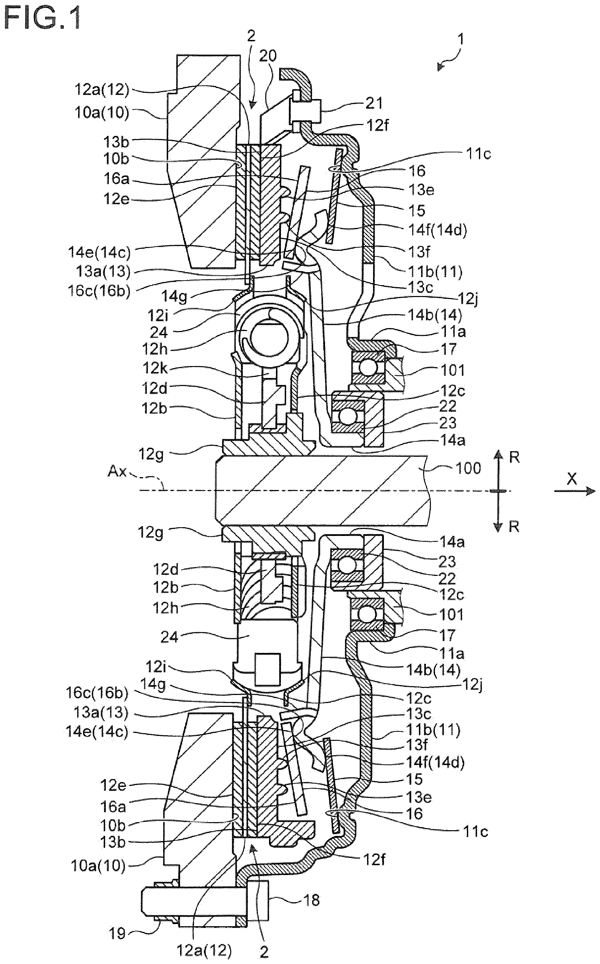

The member 10 is positioned on one axial side (left side in FIG. 1) of the clutch device 1. The member 10 is rotatably provided about the rotation center Ax. The member 10 serves as an inertial member (flywheel). The member 10 is coupled with and supported by the crankshaft (not illustrated) of the engine through, for example, a bolt (not illustrated). The member 10 includes a wall 10a. The wall 10a has a ring-like shape about the rotation center Ax. The wall 10a has a disk-like shape. The wall 10a expands in a direction intersecting with (substantially orthogonal to) the rotation center Ax. The wall 10a includes a face 10b. The face 10b of the wall 10a is on the other axial side. The face 10b opposes a member 11. The member 10 is an exemplary first member.

The member 11 (for example, a clutch cover) is positioned on the other axial side (right side in FIG. 1) of the clutch device 1. The member 11 is rotatably provided about the rotation center Ax. The member 11 has a dome-like shape about the rotation center Ax and expands toward the other axial side. The member 11 covers the members 12 to 14 and elastic members 15 and 16. The member 11 is rotatably supported by a protrusion 101 through a bearing 17. The protrusion 101 is connected (coupled or fixed) with a case (not illustrated) of the transmission. The protrusion 101 has a cylindrical shape about the rotation center Ax. The member 11 is connected (coupled or fixed) with the member 10 with coupling members 18 and 19 (for example, a bolt and a nut). In the present embodiment, one axial end of the member 11 is coupled with the member 10, and the other axial end of the member 11 is rotatably supported by the protrusion 101 through the bearing 17. The bearing 17 is, for example, a ball bearing. Thus, the member 11 rotates integrally with the member 10 with respect to the protrusion 101. The member 11 is an exemplary cover.

The member 11 includes walls 11a and 11b and a protrusion 11c. The wall 11a is positioned radially inside the member 11 (closer to the rotation center Ax), and has a cylindrical shape. The wall 11b extends radially outward from one axial end of the wall part 11a. A radial outer end of the wall 11b is positioned further on the one axial side than a radial inner end of the wall 11b. The protrusion 11c protrudes toward the one axial side from a position between the radial outer end and the radial inner end of the wall 11b. The protrusion 11c may be, for example, a partially bent part of the wall 11b. The protrusion 11c has a circular shape about the rotation center Ax. The protrusion 11c does not need to extend along the entire circumference, and multiple protrusions 11c may be provided at intervals in the circumferential direction instead.

The members 12 to 14 and the elastic members 15 and 16 are positioned between the members 10 and 11 in the clutch device 1. The member 12 (for example, a clutch disc or a damper device) is positioned furthest on the one axial side (closer to the member 10) between the members 10 and 11. The member 12 is rotatably provided about the rotation center Ax. The member 12 as a whole is formed as a thin and flat disk in the axial direction. The member 12 (wall 12a) together with the members 10 and 13 form the rotation transmitting unit 2. In the transmitting state of the rotation transmitting unit 2, the member 12 is sandwiched between the members 10 and 13 in the axial direction and rotated integrally with the members 10 and 13 by frictional force therebetween. The member 12 is an exemplary second member.

The wall 12a is a part of the member 12. The wall 12a is positioned on the radial outer side of the member 12. The wall 12a has ring-like shape about the rotation center Ax. The wall 12a has a disk-like shape. The wall 12a expands in the direction intersecting with (substantially orthogonal to) the rotation center Ax.

A frictional member 12e is coupled (fixed) on one axial-side face of the wall 12a. A frictional member 12f is coupled (fixed) on the other axial-side face of the wall 12a. The frictional members 12e and 12f are coupled with the wall 12a through adhesion, a coupling member, or the like. The frictional members 12e and 12f are each ring-like plates about the rotation center Ax. The frictional members 12e and 12f may each have any shape other than a circle. For example, multiple rectangular frictional members 12e and 12f may be arranged about the rotation center Ax. The frictional members 12e and 12f are aligned with each other in the axial direction. The frictional member 12e is positioned between the wall 12a and the member 10 (face 10b), and the frictional member 12f is positioned between the wall 12a and the member 13 (face 13b). The member 12 may be sandwiched between the members 10 and 13 through the frictional members 12e and 12f.

Walls 12b and 12c are a part of the member 12. The walls 12b and 12c are positioned more radially inside than the wall 12a. The walls 12b and 12c are at least partially spaced apart in the axial direction. The wall 12b is positioned further on the one axial side than the wall 12c. The walls 12b and 12c are formed as ring-like plates about the rotation center Ax. The walls 12b and 12c expand in the direction intersecting with (substantially orthogonal to) the rotation center Ax. The walls 12b and 12c are substantially parallel to each other. A radial outer end of the wall 12b is connected (coupled or fixed) with a radial inner end of the wall 12a. The walls 12b and 12c are provided with openings 12i and 12j, respectively. The openings 12i and 12j are through-holes axially penetrating through the walls 12b and 12c. The openings 12i and 12j are aligned with each other in the axial direction. The walls 12a to 12c integrally rotate about the rotation center Ax.

A wall 12d is a part of the member 12. The wall 12d is positioned between the walls 12b and 12c. The wall 12d is formed as a ring-like plate about the rotation center Ax. The wall 12d expands in the direction intersecting with (substantially orthogonal to) the rotation center Ax. The wall 12d is rotatably provided about the rotation center Ax relative to the walls 12b and 12c. However, the relative rotation of the wall 12d and the walls 12b and 12c is restricted in a predetermined angle range through, for example, contact between not-illustrated stoppers. The wall 12d is provided with an opening 12k. The opening 12k is a cutout that is opened radially outward from a radial outer end of the wall 12d. The opening 12k axially penetrates through the wall 12d. The openings 12i, 12j, and 12k are aligned with one another in the axial direction.

A tube 12g (for example, a sleeve) is a part of the member 12. The tube 12g is positioned more radially inside than the walls 12b to 12d. The tube 12g is rotatably provided about the rotation center Ax. The tube 12g has a cylindrical shape (circular tube) about the rotation center Ax. The shaft 100 is inserted into the tube 12g. The tube 12g is engaged with the wall 12d and the shaft 100 in the circumferential direction. Thus, the tube 12g rotates integrally with the wall 12d and the shaft 100. The tube 12g rotatably supports the walls 12b and 12c about the rotation center Ax. In other words, the tube 12g also functions as a bearing for the walls 12b and 12c.

An elastic member 12h is a part of the member 12. The elastic member 12h is provided among the walls 12b and 12c and the wall 12d. The elastic member 12h transmits torque among the walls 12b and 12c and the wall 12d. The elastic member 12h serves as a compression spring to contract (elastically deform or expand and contract) in the circumferential direction. The elastic member 12h is a coil spring. The elastic member 12h is housed in the openings 12i and 12j and the opening 12k. The openings 12i and 12j and the opening 12k housing therein the elastic member 12h are aligned with one another in the axial direction. The elastic member 12h expands and contracts in the circumferential direction of the member 12 in accordance with the relative rotation of the walls 12b and 12c and the wall 12d. The elastic member 12h elastically contracts to store torque as compression force, and elastically expands to release compression force as torque. In other words, the elastic member 12h can reduce variation in torque among the walls 12b and 12c and the wall 12d. In the present embodiment, the openings 12i and 12j and the opening 12k house therein a sheet member 24 (retainer or a protecting member). The sheet member 24 is provided between the edges of the openings 12i, 12j, and 12k, and the elastic member 12h. The sheet member 24 can hold the elastic member 12h in a more desired posture. The sheet member 24 can reduce abrasion of the elastic member 12h due to its friction with the walls 12b, 12c, and 12d.

The member 13 (for example, a pressure plate) is positioned on the opposite side of the member 12 (the wall 12a thereof) from the member 10. The member 13 is rotatably provided about the rotation center Ax. The member 13 includes a wall 13a. The wall 13a is formed as a ring-like plate about the rotation center Ax. The wall 13a expands in the direction intersecting with (substantially orthogonal to) the rotation center Ax. The wall 13a includes faces 13b and 13c. The face 13b is on one axial side of the wall 13a, and the face 13c is on the other axial side of the wall 13a. The member 13 is an exemplary fourth member.

The face 13c includes protrusions 13e and 13f. The protrusions 13e and 13f each have a circular shape about the rotation center Ax. The protrusion 13f is positioned more radially inside than the protrusion 13e. The protrusions 13e and 13f are positioned between a radial outer end (edge) and a radial inner end (edge) of the face 13c. The protrusions 13e and 13f protrude toward an elastic member 16 (the other axial side). The protrusion 13f is an exemplary first support, and the protrusion 13e is an exemplary second support.

The members 13 and 11 are connected (coupled) with each other through an elastic member 20 (strap or elastic part). The elastic member 20 is different from the elastic member 16. In the present embodiment, for example, multiple (for example, three) elastic members 20 are circumferentially provided at intervals at a radial outer end of the member 13. For example, the elastic member 20 extends in the circumferential direction outside the radial outer end of the member 13 and extends from the member 13 toward the other axial side. The elastic member 20 and the member 13 are connected (coupled) with each other through a coupling member (for example, a rivet; not illustrated) or by welding. The elastic member 20 and the wall 11b of the member 11 are connected (coupled or fixed) with each other through a coupling member 21 (for example, a rivet). FIG. 1 illustrates one of multiple elastic members 20. The elastic member 20 elastically deforms along with the axial motion of the member 13 (wall 13a). In other words, the elastic member 20 applies elastic force to the member 13 in accordance with the axial position of the member 13. The elastic member 20 may be formed as part of the member 13 (integrally with the member 13). The elastic member 20 is an exemplary third elastic member.

The member 14 (release plate) is positioned on the opposite side of the elastic member 16 from the member 13. The member 14 is provided between the elastic member 16 and the elastic member 15. The member 14 is rotatably provided about the rotation center Ax. The member 14 is formed as a circular plate about the rotation center Ax. The member 14 includes a tube 14a and a wall 14b. The tube 14a is positioned radially inside the member 14. The tube 14a has a cylindrical shape about the rotation center Ax. The tube 14a covers the shaft 100 from radially outside. The wall 14b extends from the tube 14a radially outward. The wall 14b has a relatively flat, conical shape. The wall 14b includes faces 14c and 14d. The face 14c is on one axial side of the wall 14b. The face 14d is on the other axial side of the wall 14b. The member 14 is an exemplary fifth member.

Protrusions 14e and 14f are provided on the radial outer side of the wall 14b. The protrusion 14f is positioned more radially outside than the protrusion 14e. The protrusion 14e is positioned radially inside than the protrusion 13f. The protrusion 14e is provided on the face 14c, protruding toward the one axial side. The protrusion 14e is in contact with the elastic member 16. The protrusion 14f is provided on the face 14d, protruding toward the other side in the axial direction. The protrusion 14f is in contact with the elastic member 15. The protrusion 14e is an exemplary second contact, and the protrusion 14f is an exemplary first contact. The wall 14b is provided with a guide 14g (support). The guide 14g extends from the wall 14b toward the one axial side. The guide 14g is positioned radially inside the circular elastic member 16. The guide 14g is provided in a predetermined area (part) about the rotation center Ax. The guide 14g radially moves to contact and support the elastic member 16. The guide 14g may have a circular shape about the rotation center Ax.

The member 14 is rotatably supported by the member 23 through the bearing 22. The bearing 22 is a ball bearing. The member 23 is supported by the protrusion 101 to be axially movable. In the member 23 a recess is fitted with prongs of a fork so as to prevent rotation. In other words, similarly to the protrusion 101, the member 23 cannot rotate about the rotation center Ax. Along with the axial motion of the member 23 relative to the protrusion 101, the bearing 22 and the member 14 move in the axial direction. In other words, the member 14 is movable in the axial direction.

In the clutch device 1, the members 10, 11, 13, and 14 and the elastic members 15 and 16 integrally rotate about the rotation center Ax. The member 12 and the shaft 100 integrally rotate about the rotation center Ax. In the transmitting state of the rotation transmitting unit 2, the member 12 and the shaft 100 rotate integrally with the members 10, 11, 13, and 14 and the elastic members 15 and 16. In the disconnected state of the rotation transmitting unit 2, the member 12 and the shaft 100 can rotate independently from the members 10, 11, 13, and 14 and the elastic members 15 and 16. Except for the frictional members 12e and 12f and a slide member (not illustrated), the members 10 to 14 and the elastic members 15 and 16 may be made from a metal material (for example, iron material). The frictional members 12e and 12f may be made from, for example, a glass fiber material or a synthetic resin material including synthetic rubber.

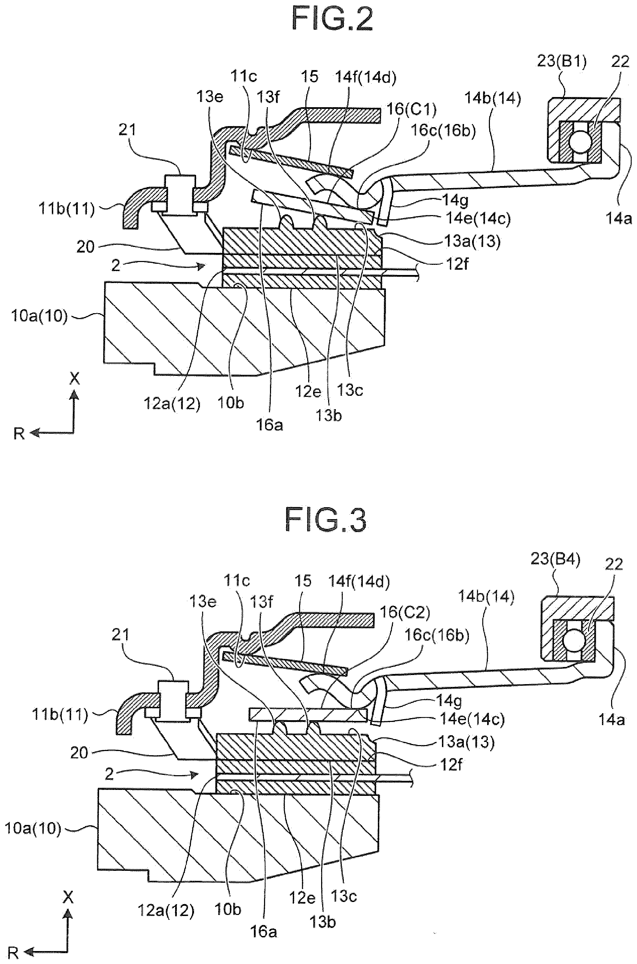

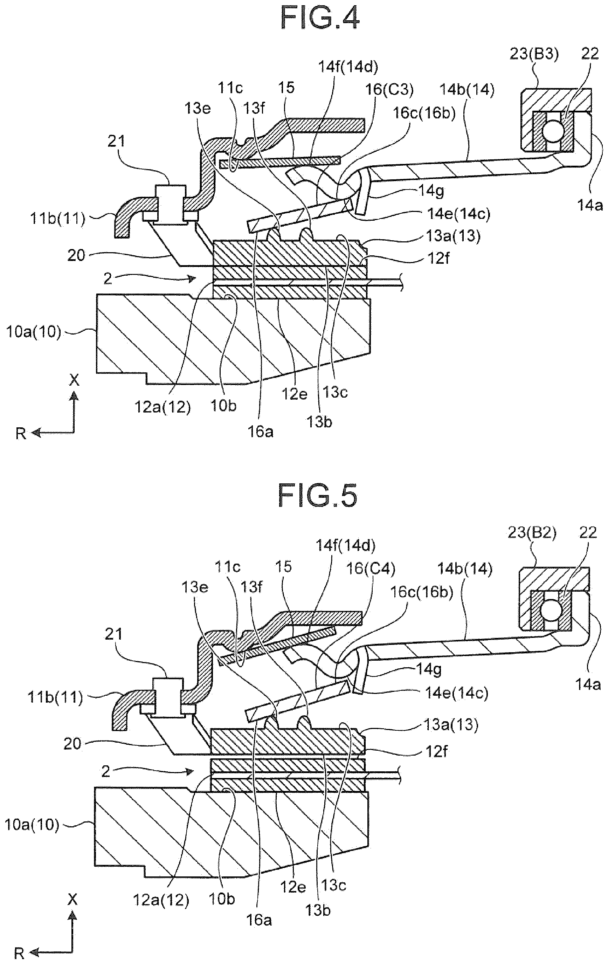

Along with the motion of the member 23 toward the one axial side, the bearing 22 and the member 14 move toward the one axial side. Along with the motion of the member 14 toward the one axial side, the member 13 is pressed toward the one axial side through the elastic member 16. While the members 14 and 23 and the bearing 22 are positioned furthest on the one axial side of their respective axial movable ranges, the wall 12a of the member 12 is sandwiched between the members 10 and 13 through the frictional members 12e and 12f, and torque (rotation) is transmitted by friction among the members 10 and 13 and the member 12. This state is referred to as transmitting state of the rotation transmitting unit 2. In contrast, along with the motion of the member 23 toward the other axial side, the bearing 22 and the member 14 move toward the other axial side. Along with the motion of the member 14 toward the other axial side, smaller force to the one axial side is applied to the member 12 from the member 13. While the members 14 and 23 and the bearing 22 are positioned furthest on the other axial side of their axial movable ranges, no torque (rotation) is transmitted by friction among the members 10 and 13 and the member 12. This state is referred to as disconnected state of the rotation transmitting unit 2. While the members 14 and 23 and the bearing 22 are positioned at middle positions in their axial movable ranges, reduced torque (rotation) is transmitted by friction among the members 10 and 13 and the member 12. This state is referred to as slipping state (half-clutch state) of the rotation transmitting unit 2. In other words, the member 23 is movably provided in the axial direction between a position B1 (first position; FIG. 2) at which torque is transmitted by friction among the members 10 and 12 and a position B2 (second position; FIG. 5) at which no torque is transmitted between the members 10 and 12. The rotation transmitting unit 2 is placed in the transmitting state when the member 23 comes at the position B1, and in the disconnected state when the member 23 comes at the position B2. The member 23 is coupled with an actuator through an operation member (not illustrated). The member 23 receives an operating force (drive power) of the actuator and moves in the axial direction. Forces of the elastic members 15, 16, and 20 are transmitted to the member 23 and the operation member through the member 14 and the bearing 22. The member 23 may be moved by an operation on a clutch pedal by an operator (driver) instead of the actuator. The member 23 and the bearing 22 are an exemplary third member.

The elastic member 15 is provided between the member 11 and the member 14. The elastic member 15 is rotatably provided about the rotation center Ax. The elastic member 15 rotates integrally with members 11 and 14. The elastic member 15 is formed as a ring-like plate about the rotation center Ax. The elastic member 15 is, for example, a disc spring (cone spring). The elastic member 15 is supported by the protrusion 11c of the member 11 and the protrusion 14f of the member 14. The protrusion 11c is positioned more radially outside than the protrusion 14f. Thus, the part of the elastic member 15 supported by the protrusion 11c is positioned more radially outside than the part of the elastic member 15 supported by the protrusion 14f. The elastic member 15 elastically deforms in accordance with an axial distance between the member 11 (the protrusion 11c) and the member 14 (the protrusion 14f). Specifically, as illustrated in FIGS. 2, 3, 4, and 5, as the member 14 approaches the other axial side, the elastic member 15 deforms in a further bent posture (shape) toward the other axial side at a further radial inner position with the protrusion 11c as a pivot. In the present embodiment, the further on the other axial side the member 14 is, the larger the elastic deformation of the elastic member 15 in the axial direction is and the smaller the force (elastic force or reaction force) applied from the elastic member 15 to the members 11 and 14 is. The elastic member 15 is an exemplary first elastic member.

The elastic member 16 is provided between the member 13 (member 12) and the member 14. Only one elastic member 16 is provided. The elastic member 16 is rotatably provided about the rotation center Ax. The elastic member 16 rotates integrally with the members 13 and 14. The elastic member 16 is formed as a ring-like plate about the rotation center Ax. The elastic member 16 is, for example, a disc spring (cone spring). The elastic member 16 includes faces 16a and 16b. The face 16a is on one axial side of the elastic member 16. The face 16a opposes the face 13c of the member 13. The face 16b is on the other axial side of the elastic member 16. The face 16b opposes the face 14c. An action point 16c on the radial inner side of the face 16b is in contact with the protrusion 14e. The elastic member 16 elastically deforms in accordance with an axial distance between the member 13 and the member 14 (the protrusion 14e). Specifically, as illustrated in FIGS. 5, 4, 3, and 2, along with the motion of the member 14 to the one axial side, the elastic member 16 deforms in a posture (shape) directing further to the one axial side at a further radial inner position. In the present embodiment, the further on the one axial side the member 14 is, the larger the elastic deformation of the elastic member 16 in the axial direction is and the larger the force (elastic force or reaction force) applied to the members 13 and 14 is. The elastic member 16 is an exemplary second elastic member.

However, it is apparent from FIGS. 2 to 5 that in the present embodiment, the position at which the member 13 supports the elastic member 16, in other words, the state of the elastic member 16 supported by the member 13 changes depending on the deformation state (the amount of deformation, postures C1 to C4) of the elastic member 16.

In the transmitting state of the rotation transmitting unit 2 illustrated in FIG. 2, torque (rotation) is transmitted among the members 10 and 13 and the member 12. In FIG. 2, the elastic member 16 is in the posture C1. The posture C1 is an exemplary first posture.

In the slipping state of the rotation transmitting unit 2 illustrated in FIG. 3, reduced torque is transmitted among the members 10 and 13 and the member 12. In other words, the members 10 and 13 and the member 12 rotate while slipping relative to each other. In FIG. 3, the elastic member 16 is in the posture C2.

In the disconnected state of the rotation transmitting unit 2 illustrated in FIG. 4, no torque (rotation) is transmitted among the members 10 and 13 and the member 12. FIG. 4 illustrates the state that the members 10 and 12 and the frictional members 12e and 12f are in contact with each other, and the member 14 and the elastic member 16 are in contact with each other. FIG. 4 illustrates a boundary state between the disconnected state and the slipping state, which may be referred to as a disconnection starting state since it corresponds to a stroke position of the member 23 at which the clutch starts disconnected. In FIG. 4, the elastic member 16 is in the posture C3. The posture C3 is an exemplary second posture.

In the disconnected state of the rotation transmitting unit 2 illustrated in FIG. 5, no torque (rotation) is transmitted among the members 10 and 13 and the member 12. In the state illustrated in FIG. 5, the member 13 and the frictional member 12f are separated from each other. FIG. 5 shows the state in which the clutch is completely disconnected at the stroke of the member 23, and thus may be referred to as a disconnection completed state. In FIG. 5, the elastic member 16 is in the posture C4.

As illustrated in FIGS. 5 and 4, when the member 14 is positioned on the other axial side, the protrusion 13e supports the elastic member 16 in the axial direction, but the protrusion 13f does not support the elastic member 16. In the state illustrated in FIG. 3, the protrusions 13e and 13f both support the elastic member 16 in the axial direction. In the state illustrated in FIG. 2, the protrusion 13f supports the elastic member 16 in the axial direction. In other words, the protrusion 13e axially supports the elastic member 16 in the postures C2 to C4 but does not support the elastic member 16 in the posture C1. The protrusion 13f axially supports the elastic member 16 in the postures C1 and C2 but does not support the elastic member 16 in the postures C3 and C4. A position B4 of the member 23 in the state illustrated in FIG. 3 is the position (boundary) at which the state of the elastic member 16 supported by the member 13 changes. In other words, the member 13 supports the elastic member 16 through the protrusion 13f when the member 23 comes closer to the position B1 than the position B4, and supports the elastic member 16 through the protrusion 13e when the member 23 comes closer to the position B2 than the position B4. The distance between the protrusion 13e and the protrusion 14e in contact with the elastic member 16 in the states illustrated in FIGS. 5 and 4 is longer than the distance between the protrusion 13f and the protrusion 14e in contact with the elastic member 16 in the state illustrated in FIG. 2. Thus, in the states illustrated in FIGS. 5 and 4 the elastic member 16 is more easily bendable (deform, deflect, or have a lower stiffness) than in the state illustrated in FIG. 2, in accordance with the axial force from the member 14. In other words, in the states illustrated in FIGS. 5 and 4, the amount of change in the elastic force of the elastic member 16 in response to the amount of change (amount of movement) in the axial position of the member 14 is smaller than in the state illustrated in FIG. 2. That is, in the state illustrated in FIG. 2, the amount of change in the elastic force of the elastic member 16 in response to the amount of change (amount of movement) in the axial position of the member 14 is larger than in the states illustrated in FIGS. 5 and 4.

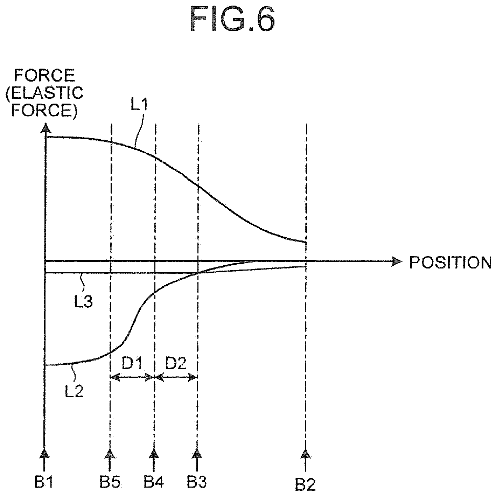

FIG. 6 illustrates the magnitude of force (elastic force or axial components) acting on the member 14 from each of the elastic members 15, 16, and 20 corresponding to the positions of the member 23. In FIG. 6, line L1 represents the force of the elastic member 15 applied to the member 14, line L2 represents the force of the elastic member 16 applied to the member 14, and line L3 represents the force of the elastic member 20 applied to the member 14. In FIG. 6 the vertical axis represents the force (elastic force) acting on the member 14 and the horizontal axis represents the axial position of the member 23. The origin of the horizontal axis in FIG. 6 represents the position B1 of the member 23 (FIGS. 1 and 2) when the rotation transmitting unit 2 is placed in the transmitting state and when no operation is performed on the member 23. The positive (upper) side of the vertical axis in FIG. 6 corresponds to the direction (one axial side) in which the member 14 approaches the member 10, and the negative (lower) side corresponds to the direction (the other axial side) in which the member 14 moves away from the member 10.

The elastic member 15 corresponding to line L1 in FIG. 6 elastically deforms in the axial direction in accordance with a change in the axial position of the member 23 and applies force to the members 13, 14, and 23 to move closer to the member 12 (the members 13 and 14 are pressed toward the members 10 and 12). The magnitude (absolute value) of the force of the elastic member 15 is at maximum when the member 23 is located at the position B1 (origin), and gradually decreases as the member 23 moves from the position B1 to the position B2 in the axial direction.

The elastic member 16 corresponding to line L2 in FIG. 6 applies force to the members 14 and 23 to move away from the member 12 (force opposite to the pressing force to the member 13 toward the members 10 and 12). The elastic member 16 elastically deforms in the axial direction in accordance with a change in the axial position of the member 23 and generates elastic force against elastic force of the elastic member 15 applied to the member 23 while the member 23 moves from the position B1 to the position B2. The magnitude (absolute value) of the force of the elastic member 16 is at maximum when the member 23 is located at the position B1 (origin), and gradually decreases as the member 23 moves from the position B1 to the position B2 in the axial direction. However, the magnitude of force of the elastic member 16 applied to the members 13, 14, and 23 is smaller than the magnitude of force of the elastic member 15 applied to the members 13, 14, and 23. The elastic member 16 also applies force to the members 13, 14, and 23 when the member 23 is located between the position B1 and a position B3 in the disconnection starting state. When the member 23 is positioned between the position B2 and the position B3, a load is generated from the load of the elastic member 20, and the elastic member 16 thus applies force to the members 13, 14, and 23.

The elastic member 20 applies force to the members 13, 14, and 23 to move away from the member 12 (force opposite to the pressing force to the members 13 and 14 toward the members 10 and 12). The magnitude (absolute value) of the force of the elastic member 20 is constant when the member 23 is located between the position B1 and the position B3, and gradually decreases as the member 23 moves from the position B3 toward the other axial side. The elastic member 20 generates elastic force against the force of the elastic member 15 applied to the member 23 in the disconnected state in which no torque is transmitted between the member 10 and the member 23. The elastic force of the elastic member 20 is used to, for example, separate the member 13 and the frictional member 12f from each other in the disconnected state (disconnection completed state) illustrated in FIG. 5.

During no operation to the member 23, the rotation transmitting unit 2 of the clutch device 1 is placed in the transmitting state, and the member 12 is sandwiched between the members 10 and 13 due to the force from the elastic member 16. In the clutch device 1, the member 23 is applied with the force (operation force) of the actuator to move toward the other axial side (right side in FIG. 1) against the force of the elastic member 15, thereby placing the rotation transmitting unit 2 in the slipping state, the disconnection starting state, and the disconnection completed state. The elastic member 16 and the elastic member 20 generate force to reduce the force generated by the elastic member 15. In other words, the elastic member 16 and the elastic member 20 contribute to reducing the operating force for the member 23 so as to transition the rotation transmitting unit 2 from the transmitting state to the slipping state, the disconnection starting state, or the disconnection completed state. In the clutch device 1, the elastic members 15, 16, and 20 are set to allow torque to be transmitted between the members 10 and 12 without slipping while the member 23 is located at the position B1. The elastic members 15, 16, and 20 are also set so that the force of the elastic member 15 is reduced by the force of the elastic members 16 and 20 to reduce the operating force for the member 23 to a relatively small force. It should be understood from FIG. 6 that the elastic members 16 and 20 generate reverse force to the force of the elastic member 15. The elastic member 16 is an exemplary assist spring.

In the present embodiment, the amount of change in the elastic force of the elastic member 16 (elastic force change rate, the gradient of line L2 in FIG. 6) relative to the amount of change (displacement per unit length) in the axial position of the member 23 varies in accordance with the state (position) of the elastic member 16 supported by the member 13. For example, as illustrated in FIG. 6, the amount of change in the elastic force of the elastic member 16 relative to the amount of axial change of the member 23 is different between a movement interval D1 and a movement interval D2 of the member 23. The movement interval D1 is an interval between the position B5 of the member 23 between the position B1 and the position B4, and the position B4. A length (distance) between the position B4 and the position B5 is equal to a length (distance) between the position B3 and the position B4. In the movement interval D1, the elastic member 16 takes the posture C1. The movement interval D2 is closer to the position B2 than the movement interval D1. Specifically, the movement interval D2 is an interval between the position B3 and the position B4. In the movement interval D2, the elastic member 16 takes the posture C3. The amount of change in the elastic force of the elastic member 16 relative to the amount of change in the axial position of the member 23 in the movement interval D1 is larger than that in the movement interval D2. The movement interval D1 is an exemplary first movement interval, and the movement interval D2 is an exemplary second movement interval.

As described above, in the present embodiment, the clutch device 1 includes one elastic member 16 as the second elastic member. Thus, for example, the clutch device 1 can have a simpler configuration than the one including multiple second elastic members. It is easier to reduce a space in the member 11. With the configuration including multiple second elastic members, a clutch operation load may largely vary and increase because of accumulation of variation in the elastic force of the second elastic members or loss due to sliding or settling. The present embodiment, however, employs only one elastic member 16, making it possible to reduce the variation in the clutch operation load and prevent it from increasing.

In the present embodiment, the member 13 includes the protrusion 13e and the protrusion 13f. The protrusion 13f supports the elastic member 16 in the axial direction when the elastic member 16 is in the elastically deformed posture C1, and does not support the elastic member 16 when the elastic member 16 is in the elastically deformed posture C3. The protrusion 13e axially supports the elastic member 16 in the posture C3. In the clutch device 1, the supporting part (support state or position) of the member 13 for the elastic member 16 is changed depending on a change in the posture of the elastic member 16 following the motion of the member 23. By this change of the supporting part, the amount of change in the elastic force of the elastic member 16 relative to the amount of change in the position of the member 23 varies. In other words, for example, the present embodiment can attain a relatively simple configuration that obtains such a characteristic that the amount of change in the elastic force of the elastic member 16 relative to the amount of change in the position of the member 23 varies in accordance with the position of the member 23. In the present embodiment, the protrusion 13e and the protrusion 13f are disposed in the member 13 but may be disposed in the member 14.

In the present embodiment, the elastic member 16 takes the posture C1 in the movement interval D1 of the member 23 and the posture C3 in the movement interval D2 of the member 23. The amount of change in the elastic force of the elastic member 16 relative to the amount of change in the axial position of the member 23 in the movement interval D1 of the member 23 is larger than that in the movement interval D2 of the member 23. In other words, the amount of change in the elastic force of the elastic member 16 relative to the amount of change in the axial position of the member 23 is smaller in the movement interval D2 in which the members 10 and 12 are in the slipping state (half-clutch state) near the disconnected state than in the movement interval D1 in which the members 10 and 12 are in the transmitting state. This further reduces the change in the operation force for axially moving the member 23 in the slipping state, which facilitates half-clutch (middle-torque) control.

In the present embodiment, the member 13 is provided between the member 23 and the member 12 to be rotatable about the rotation center Ax and movable in the axial direction. The elastic member 16 is positioned on the opposite side of the member 13 from the member 12 in the axial direction. Thus, such a relatively simple configuration that the support of the member 13 for the elastic member 16 changes depending on a change in the posture of the elastic member 16 as the member 23 moves can be achieved.

In the present embodiment, the member 14 includes the protrusion 14f to contact with the elastic member 15 and the protrusion 14e to contact with the elastic member 16, and is provided between the elastic member 15 and the elastic member 16. The member 14 moves in the axial direction along with the axial motion of the member 23.
The elastic member 16 is provided between the member 14 and the member 12. Thus, the member 14 can be used as the transmission paths of force from the member 23 to the member 12, the elastic force of the elastic member 15, and the elastic force of the elastic member 16. Thus, the structure including the member 23, the elastic member 15, and the elastic member 16 can be relatively simplified.

In the present embodiment, the elastic member 16 is a disc spring of a circular shape about the rotation center Ax. Thus, the elastic member 16 can be relatively simplified in structure.

In the present embodiment, the protrusion 13f has a circular shape about the rotation center Ax. Thus, the elastic member 16 can be supported more stably.

In the present embodiment, for example, the clutch device 1 includes the elastic member 20 different from the elastic member 16. The elastic member 20 generates elastic force against the force of the elastic member 15 to the member 23 in the disconnected state in which no torque is transmitted between the member 10 and the member 23. Thus, in the disconnected state the member 23 can be applied with the elastic force against the force of the elastic member 15.

### Second Embodiment

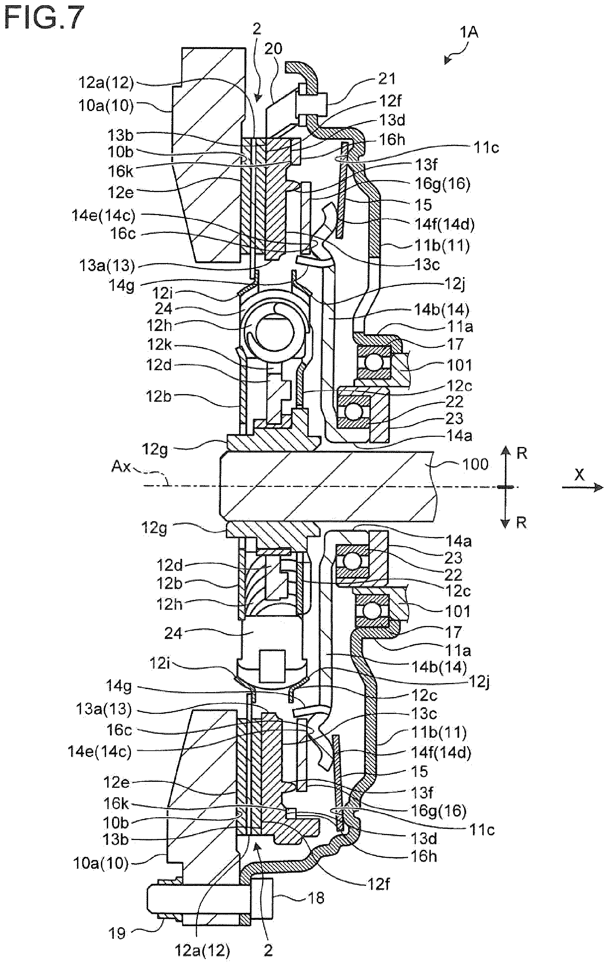

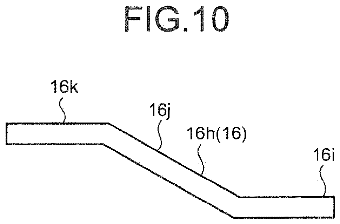

A clutch device 1A according to the present embodiment illustrated in FIGS. 7 to 10 differs from that in the first embodiment in the member 13 and the elastic member 16, for example.

Similarly to the first embodiment, the protrusion 13f is provided on the face 13c of the member 13 without the protrusion 13e (refer to FIG. 1). The protrusion 13d is also provided on the face 13c. The protrusion 13d protrudes toward the elastic member 16 (the other axial side). The protrusion 13f is provided more radially inside than the protrusion 13d.

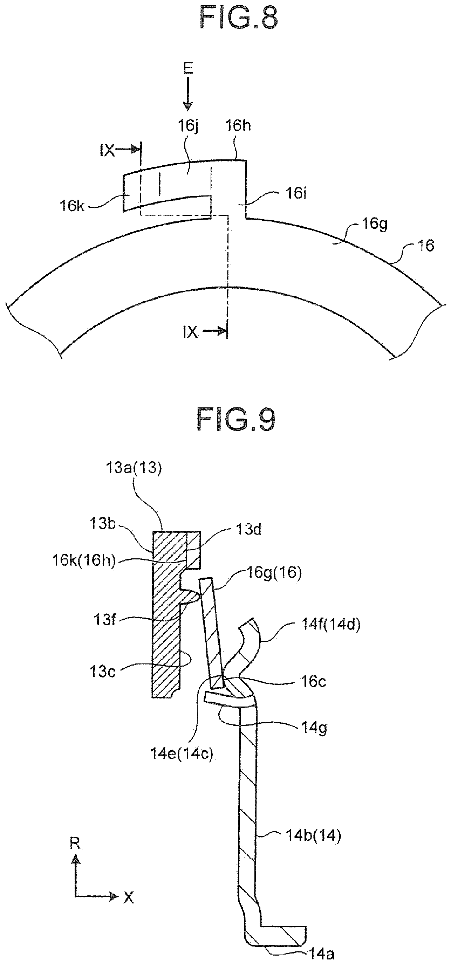

As illustrated in FIGS. 8 to 10, the elastic member 16 includes a disc spring 16g and a plate spring 16h. The disc spring 16g has a ring-like shape about the rotation center Ax. The plate spring 16h is provided more radially outside than the disc spring 16g. The plate spring 16h includes plates 16i and 16j and a contact 16k. The plate 16i extends outward in the radial direction from a radial outer end of the disc spring 16g. The plate 16j extends in the circumferential direction from a radial outer end of the plate 16i with a spacing from the disc spring 16g. The contact 16k is provided on the opposite side of the plate 16j from the plate 16i. The contact 16k contacts with the protrusion 13d of the member 13. In the present embodiment, the action point 16c is on the radial inner part of the disc spring 16g. The plate 16i may extend inward in the radial direction from a radial inner end of the disc spring 16g, and the plate 16j may extend in the circumferential direction from a radial inner end of the plate 16i with a spacing from the disc spring 16g. The plate 16i is an exemplary first plate, and the plate 16j is an exemplary second plate.

The protrusion 14e of the member 14 is in contact with the action point 16c of the disc spring 16g. The protrusion 13f is positioned on one axial side of the disc spring 16g. While the disc spring 16g is positioned on the other axial side (second posture; not illustrated), the protrusion 13f is separated from the elastic member 16. When receiving force toward the one axial side from the member 14, the elastic member 16 elastically deforms and the disc spring 16g moves from the other axial side to the one axial side, as illustrated in FIG. 9 to contact the protrusion 13f at the radial outer end (the first posture). While the disc spring 16g moves from the position on the other axial side until contacting with the protrusion 13f, that is, while the disc spring 16g is separated from the protrusion 13f (the second posture), the plate spring 16h of the elastic member 16 mainly deforms. While the disc spring 16g is in contact with the protrusion 13f (the first posture), the disc spring 16h of the elastic member 16 mainly deforms. The protrusion 13f is an exemplary first support, and the protrusion 13d is an exemplary second support.

As described above, in the present embodiment, the member 13 includes the protrusion 13d and the protrusion 13f. The protrusion 13f axially supports the elastic member 16 elastically deformed in the first posture, and does not support the elastic member 16 elastically deformed in the second posture. The protrusion 13d axially supports the elastic member 16 in the first posture and the second posture. Thus, in the present embodiment, similarly to the first embodiment, the supporting part (the state or position of support) of the member 13 for the elastic member 16 is changed depending on a change in the posture of the elastic member 16 along with the motion of the member 23. By the change of the supporting part, the amount of change in the elastic force of the elastic member 16 relative to the amount of change in the position of the member 23 varies. In other words, for example, the present embodiment achieves a relatively simple configuration that obtains such a characteristic that the amount of change in the elastic force of the elastic member 16 relative to the amount of change in the position of the member 23 varies in accordance with the position of the member 23.

In the present embodiment, the elastic member 16 includes the disc spring 16g and the plate spring 16h. Thus, the bending stiffness (elastic force) of the elastic member 16 can be adjusted by adjusting the specifications (for example, length, thickness, width, or shape) of the plate spring 16h. In other words, the degree of freedom for setting the bending stiffness (elastic force) of the elastic member 16 is higher than that for the elastic member 16 formed of only the disc spring 16g.

In the present embodiment, the plate spring 16h includes the plate 16i extending from the disc spring 16g in the radial direction (outward or inward), and the plate 16j extending from the plate 16i in the circumferential direction. Thus, the plate spring 16h has a reduced radial length than the plate spring 16h extending in the radial direction.

### Third Embodiment

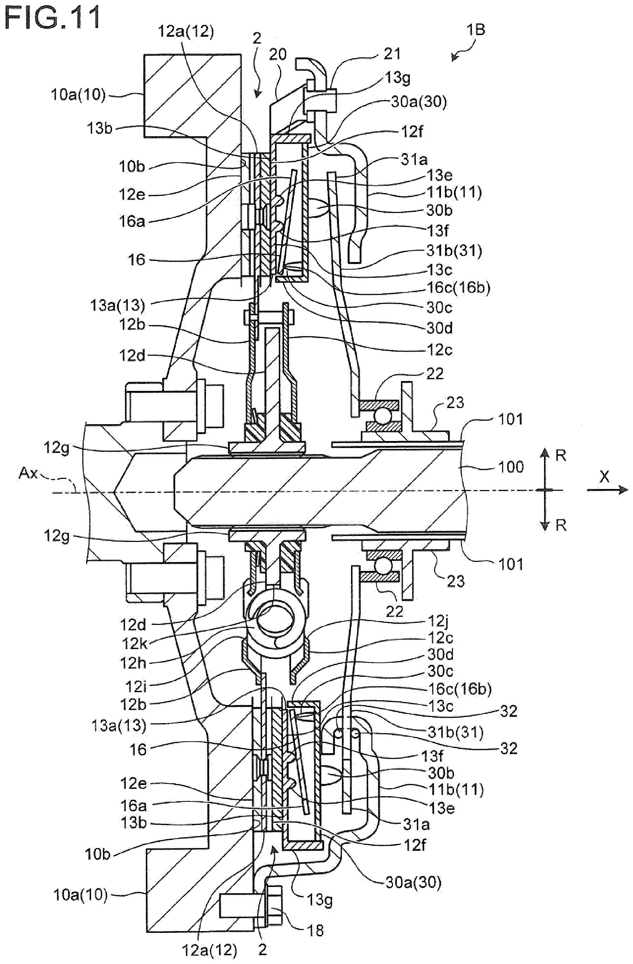

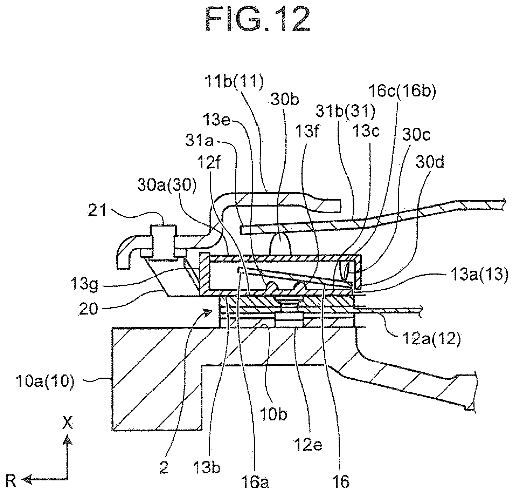

A clutch device 1B according to the present embodiment illustrated in FIGS. 11 and 12 is different from that in the first embodiment in including a member 30 and an elastic member 31. The clutch device 1B does not include the elastic member 15. The member 11 includes the wall part 11b but does not include the wall 11a (refer to FIG. 1).

The member 30 is positioned on the other axial side of the elastic member 16. The elastic member 31 is positioned on the other axial side of the member 30. The member 30 is provided between the elastic member 16 and the elastic member 31.

The member 30 includes a wall 30a. The wall 30a is formed as a ring-like plate about the rotation center Ax. The wall 30a expands in the direction intersecting with (substantially orthogonal to) the rotation center Ax. The wall 30a is provided with protrusions 30b and 30c. The protrusion 30b is provided on the other axial-side face of the wall 30a. The protrusion 30b is provided between a radial outer end and a radial inner end of the wall 30a. The protrusion 30b faces the elastic member 31. The protrusion 30b contacts with the elastic member 31 (a disc spring 31a thereof). The protrusion 30c is provided on one axial side of the wall 30a. The protrusion 30c is provided more radially inside than the protrusion 30b. The protrusion 30c faces the elastic member 16. The protrusion 30c contacts with the elastic member 16 (the action point 16c thereof). The wall 30a is provided with a guide 30d (support). The guide 30d extends toward the one axial side from a radial inner end of the wall 30a. The guide 30d is positioned radially inside the circular elastic member 16. The guide 30d is provided in a predetermined area (part) about the rotation center Ax. The guide 30d moves in the radial direction, contacts the elastic member 16, and radially supports it. The guide 30d may have a circular shape about the rotation center Ax.

The radial outer end of the wall 30a is coupled with a support 13g. The support 13g is provided at the radial outer end of the member 13. The support 13g has a cylindrical shape about the rotation center Ax. The support 13g protrudes toward the other axial side. The wall 30a and the support 13g may be coupled with each other through a spline structure. In other words, the member 30 integrally rotates with the member 13 and is movably supported in the axial direction by the member 13.

The elastic member 31 is provided between the bearing 22 and the member 30. The elastic member 31 is a diaphragm spring. The elastic member 31 includes the disc spring 31a and a plurality of levers 31b. The disc spring 31a is provided on the radial outer part of the elastic member 31. The disc spring 31a is formed as a ring-like plate about the rotation center Ax. The disc spring 31a expands in a direction intersecting with the rotation center Ax. Each lever 31b extends radially inward from a radial inner end of the disc spring 31a. The levers 31b are aligned in the circumferential direction of the disc spring 31a. Each lever 31b is a triangular plate sharply angled radially inward. The lever 31b expands in the direction intersecting with the rotation center Ax. Part of the lever 31b between the radial outer end and the radial inner end is swingably supported by the wall 11b. The elastic member 31 and the wall 11b are coupled with each other through a support member 32 (for example, a wire rod).

The elastic member 31 elastically deforms in the axial direction along with the axial motion of the member 23. The elastic member 31 elastically deforms to apply force (elastic force) to the member 30 and the bearing 22. The elastic member 31 applies force to the member 30 to move the member 30 closer to the wall 13a, and applies force to the bearing 22 to move away from the member 30. The force of the elastic member 31 applied to the member 30 is transmitted to the member 12 through the elastic member 16 and the member 13. The force of the elastic member 31 applied to the bearing 22 is transmitted to the member 23 through the bearing 22. The elastic member 31 is an exemplary first elastic member.

In the present embodiment, the bearing 22 is positioned on the other axial side of the elastic member 31. An outer end of the bearing 22 is in contact with a radial inner end of the lever 31b. The radial outer end of the bearing 22 presses the radial inner end of the lever 31b toward the one axial side. A radial inner end of the bearing 22 is supported by the member 23. The member 23 covers the protrusion 101 from the radial outer periphery. The member 23 is movably supported in the axial direction by the protrusion 101. The member 23 receives the operation force (drive power) of the actuator (not illustrated) and moves in the axial direction. The bearing 22 and the member 23 integrally move in the axial direction. Thus, the actuator moves the lever 31b and the disc spring 31a through the member 23 and the bearing 22, and thus moves the member 30 in the axial direction.

In the present embodiment, when the member 23 is positioned at the other axial end (first position) of its axial movable range , the elastic force of the elastic member 31 pressing the member 30 toward the one axial side is at maximum, placing the rotation transmitting unit 2 in the transmitting state. In contrast, when the member 23 is positioned at one axial end (second position) of its axial movable range, the members 12 and 13 are separated by the elastic member 20, placing the rotation transmitting unit 2 in the disconnection completed state (disconnected state). In other words, in the present embodiment, the positions of the member 23 when the rotation transmitting unit 2 is in the transmitting state and in the disconnection completed state (disconnected state) are reverse to those in the first embodiment. The elastic member 31 elastically deforms in accordance with the axial position of the member 23. The elastic force of the elastic member 31 has the same characteristic as that of the elastic member 15 in the first embodiment. In the present embodiment, the posture of the elastic member 16 changes as the member 23 moves in the axial direction. In the first embodiment, while the member 23 is moving from one side to the other side in the axial direction, the posture of the elastic member 16 changes in the order of the posture C1, the posture C2, the posture C3, and the posture C4. In the present embodiment, however, while the member 23 is moving from the other side to the one side in the axial direction, the posture of the elastic member 16 changes in the order of the posture C1, the posture C2, the posture C3, and the posture C4.

As described above, similarly to the first embodiment, in the present embodiment the member 13 includes the protrusion 13e and the protrusion 13f. Thus, in the present embodiment, similarly to the first embodiment, along with the motion of the member 23, the supporting part (the state or position of support) of the member 13 for the elastic member 16 is changed depending on a change in the posture of the elastic member 16. By the change of the supporting part, the amount of change in the elastic force of the elastic member 16 in response to the amount of change in the position of the member 23 varies. In other words, for example, the present embodiment achieves a relatively simple configuration that obtains such a characteristic that the amount of change in the elastic force of the elastic member 16 in response to the amount of change in the position of the member 23 varies in accordance with the position of the member 23.

### FOURTH EMBODIMENT

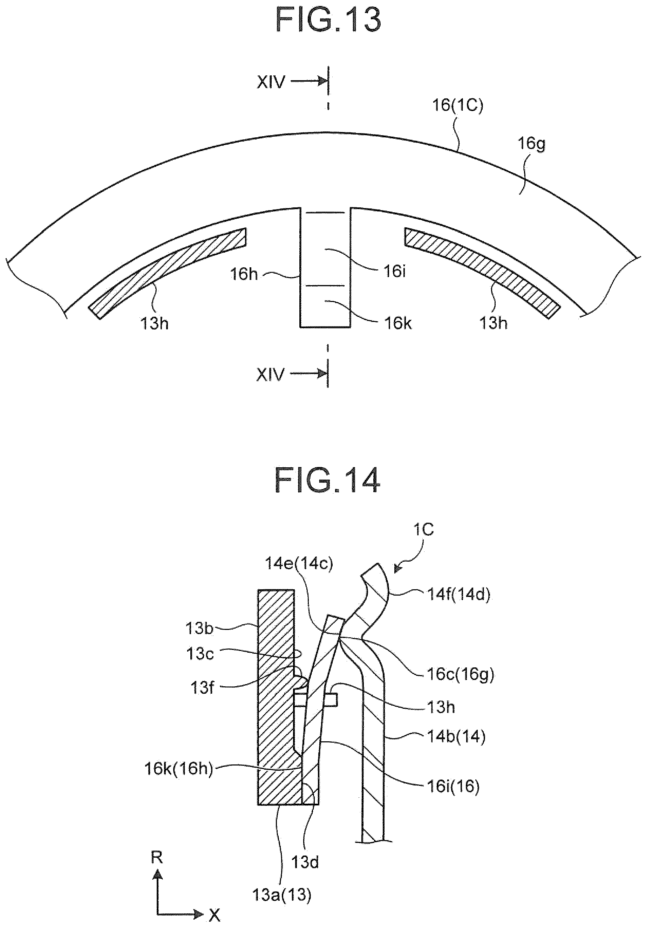

A clutch device 1C according to the present embodiment illustrated in FIGS. 13 and 14 differs from that in the second embodiment in the protrusion 13d and the protrusion 13f of the member 13, and the plate spring 16h of the elastic member 16.

Similarly to the second embodiment, as illustrated in FIG. 14, the protrusion 13d and the protrusion 13f are provided on the face 13c of the member 13. In the present embodiment, however, the protrusion 13f is provided more radially outside than the protrusion 13d.

Similarly to the second embodiment, as illustrated in FIGS. 13 and 14, the elastic member 16 includes the disc spring 16g and the plate spring 16h. In the present embodiment, however, the plate spring 16h is provided more radially inside than the disc spring 16g. The plate spring 16h includes the plate 16i and the contact 16k but is not provided with the plate 16j (FIG. 8). In the present embodiment, the plate 16i extends radially inward from the radial inner end of the disc spring 16g. The contact 16k is provided on the opposite side of the plate 16i from the disc spring 16g. The contact 16k is in contact with the protrusion 13d of the member 13. In the present embodiment, the action point 16c is on a radial outer part of the disc spring 16g.

The protrusion 14e of the member 14 is in contact with the action point 16c of the disc spring 16g. The protrusion 13f is positioned on the one axial side of the disc spring 16g. While the disc spring 16g is positioned on the other axial side (the second posture; not illustrated), the protrusion 13f is separated from the elastic member 16. When receiving force from the member 14 toward the one axial side, the elastic member 16 elastically deforms, and the disc spring 16g moves from the other side to the one side in the axial direction and contacts the protrusion 13f at the radial inner end (the first posture) as illustrated in FIG. 14. While the disc spring 16g moves from the position on the other axial side and contacts with the protrusion 13f, in other words, while (the second posture) the disc spring 16g is separated from the protrusion 13f, the plate spring 16h deforms in the elastic member 16. While (the first posture) the disc spring 16g is in contact with the protrusion 13f, the disc spring 16g mainly deforms in the elastic member 16.

The wall 13a is provided with a guide 13h (support). The guide 13h extends from the face 13c toward the other axial side. The guide 13h is positioned radially inside the circular disc spring 16g of the elastic member 16. The guide 13h is provided in a predetermined area (part) about the rotation center Ax. The guide 13h radially moves to contact and support the elastic member 16.

As described above, in the present embodiment, the member 13 includes the protrusion 13d and the protrusion 13f. The protrusion 13f axially supports the elastic member 16 elastically deformed in the first posture, but does not support the elastic member 16 elastically deformed in the second posture. The protrusion 13d axially supports the elastic member 16 in the first posture and the second posture. Thus, similarly to the second embodiment, in the present embodiment, the supporting part (the state or position of support) of the member 13 for the elastic member 16 is changed in accordance with a change in the posture of the elastic member 16 as the member 23 moves. By the change of the supporting part, the amount of change in the elastic force of the elastic member 16 relative to the amount of change in the position of the member 23 varies. In other words, for example, the present embodiment achieves a relatively simple configuration that obtains such a characteristic that the amount of change in the elastic force of the elastic member 16 in response to the amount of change in the position of the member 23 varies in accordance with the position of the member 23.

In the present embodiment, the elastic member 16 includes the disc spring 16g and the plate spring 16h. Thus, the bending stiffness (elastic force) of the elastic member 16 can be adjusted by adjusting the specifications (for example, length, thickness, width, or shape) of the plate spring 16h. In other words, the degree of freedom for setting the bending stiffness (elastic force) of the elastic member 16 is higher than that for the elastic member 16 formed of only the disc spring 16g.

### Fifth Embodiment

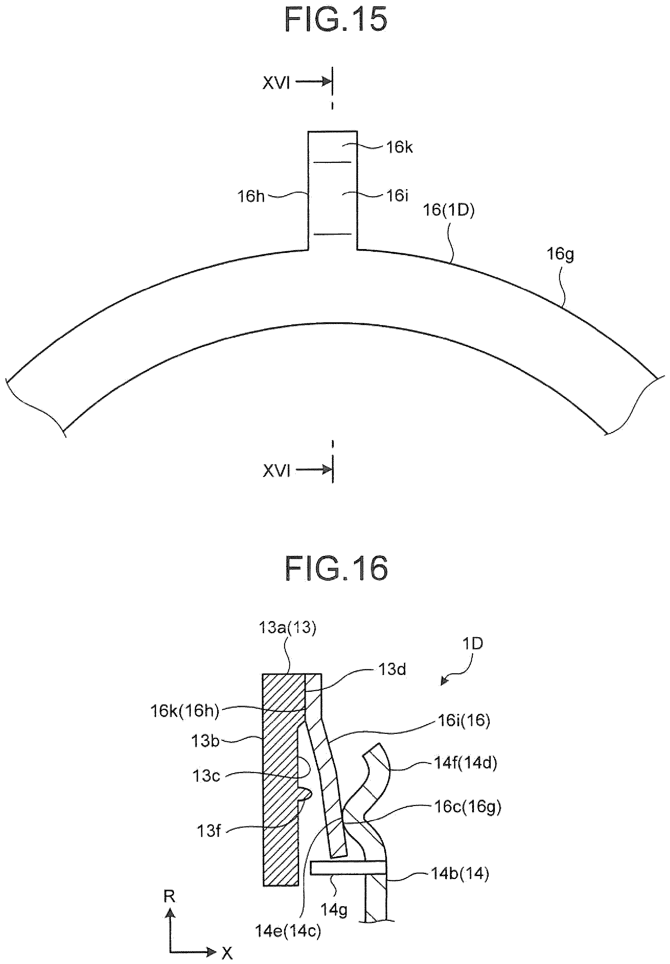

A clutch device 1D according to the present embodiment illustrated in FIGS. 15 and 16 differs from the one in the fourth embodiment in the protrusion 13d and the protrusion 13f of the member 13, and the plate spring 16h of the elastic member 16.

Similarly to the fourth embodiment, as illustrated in FIG. 16, the protrusion 13d and the protrusion 13f are provided on the face 13c of the member 13. In the present embodiment, however, the protrusion 13f is provided radially more inside than the protrusion 13d.

Similarly to the fourth embodiment, as illustrated in FIGS. 15 and 16, the elastic member 16 includes the disc spring 16g and the plate spring 16h. In the present embodiment, however, the plate spring 16h is provided more radially outside than the disc spring 16g. In the present embodiment, the plate 16i of the plate spring 16h extends radially outward from the radial outer end of the disc spring 16g. The contact 16k is provided on the opposite side of the plate 16i from the disc spring 16g. The contact 16k contacts with the protrusion 13d of the member 13. In the present embodiment, the action point 16c is on a radial inner part of the disc spring 16g.

The protrusion 14e of the member 14 is in contact with the action point 16c of the disc spring 16g. The protrusion 13f is positioned on the one axial side of the disc spring 16g. While the disc spring 16g is positioned on the other axial side (the second posture; FIG. 16), the protrusion 13f is separated from the elastic member 16. When receiving the force from the member 14 toward the one axial side, the elastic member 16 elastically deforms and the disc spring 16g moves from the other side to the one side in the axial direction to contact the protrusion 13f at the radial outer end (the first posture; not illustrated). While the disc spring 16g moves from the position on the other axial side to contact with the protrusion 13f, in other words, while (the second posture; FIG. 16) the disc spring 16g is separated from the protrusion 13f, the plate spring 16h of the elastic member 16 mainly deforms. While (the first posture) the disc spring 16g is in contact with the protrusion 13f, the disc spring 16g of the elastic member 16 mainly deforms.

The above-described configuration achieves the same effects as those of the fourth embodiment.

### Sixth Embodiment

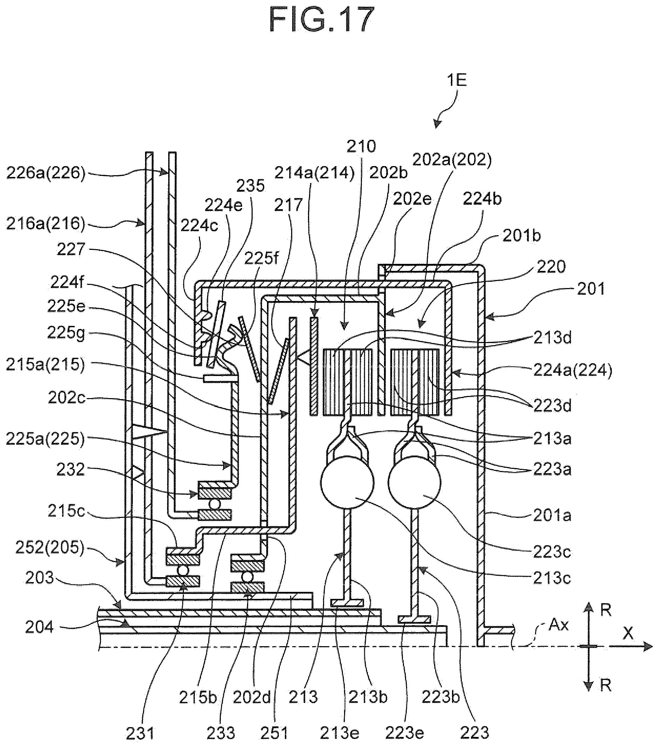

A clutch device 1E according to the present embodiment illustrated in FIG. 17 is a so-called twin clutch including two rotation transmitting units 210 and 220.

In the clutch device 1E, the movable units (members 214, 224, 215,225, 216, and 226, and bearings 231 and 232, for example) are moved in the axial direction by the not-illustrated actuator, switchably placing the rotation transmitting units 210, 220 in a state that rotation (torque) is transmitted selectively through one of the rotation transmitting unit 210 and the rotation transmitting unit 220, and a state that the rotation transmission through both of the rotation transmitting unit 210 and the rotation transmitting unit 220 is interrupted. The rotation transmitting unit 210 can change the rotation transmitting state among members 201 and 202 and a shaft 203. The rotation transmitting unit 220 can change the rotation transmitting state among the members 201 and 202 and a shaft 204. The rotation transmitting units 210 and 220 can transmit rotation in a so-called half-clutch state in which output torque is smaller than input torque.

The clutch device 1E includes the members 201 and 202, members 213 to 216, the shaft 203, and the bearing 231 as components involving in the rotation transmission and disconnection through the rotation transmitting unit 210. The members 201, 202, and 213 to 216 and the shaft 203 may be made from, for example, a metal material.

The shafts 203 and 204 are rotatably supported by a case 205 (for example, a transmission case) through a bearing (not illustrated). The shafts 203 and 204 rotate about the rotation center Ax. In other words, the shafts 203 and 204 are multiple (in the present embodiment, two) concentric rotational elements. One of the shafts 203 and 204 at least partially have a tubular shape, whereas the other is placed in the tubular shaft.

The case 205 is provided (fixed or coupled) with a protrusion 251. The protrusion 251 covers the shafts 203 and 204 from radially outside (outer periphery). The protrusion 251 protrudes as a tube (cylinder) from a wall 252 toward the other axial side (right side in FIG. 17). The protrusion 251 may be formed integrally with any other part (for example, the wall 252) of the case 205, or may be formed as a member separate from the other part and integrated with the other part with a coupling member (for example, a screw or a rivet; not illustrated). The case 205 is an exemplary housing.

The member 201 (for example, a drive plate or a flywheel) is rotatably provided about the rotation center Ax. The member 201 includes walls 201a and 201b. The wall 201a is formed as a disk and expands in a direction intersecting with (substantially orthogonal to) the rotation center Ax. The wall 201b protrudes toward the one axial side (left side in FIG. 17) from an end of the wall 201a, and has a cylindrical shape. The member 201 is supported by a drive source (not illustrated; for example, an engine).

The member 202 (for example, a clutch cover) is rotatably provided about the rotation center Ax. The member 202 includes walls 202a, 202b, and 202c. The wall 202a is connected (coupled or fixed) with the wall 201b of the member 201. The wall 202a is formed as a ring-like plate and expands in the direction intersecting with (substantially orthogonal to) the rotation center Ax. The wall 202b protrudes toward the one axial side (left side in FIG. 17) from an radial outer end of the wall 202a, and has a cylindrical shape. The wall 202c is connected (coupled or fixed) with the wall 202b. The wall 202c has a disk-like shape and expands in the direction intersecting with the rotation center Ax. One of rotational parts (for example, a rotational part radially inside) of a bearing 233 is connected (coupled or fixed) with the protrusion 251, whereas the other rotational part (for example, a rotational part radially outside) is connected (coupled or fixed) with a radial inner end of the wall 202c (the member 202). The wall 202c (member 202) is rotatably supported about the rotation center Ax by the bearing 233. The member 202 is an exemplary first member.

The member 213 (for example, a first clutch disc) is provided on the one axial side (left side in FIG. 17) of the wall 202a. The member 213 includes walls 213a and 213b, an elastic member 213c, a frictional member 213d, and a spline coupling 213e. The wall 213a has a disk-like shape and expands in the direction intersecting with (substantially orthogonal to) the rotation center Ax. The wall 213b has a disk-like shape and expands in the direction intersecting with (substantially orthogonal to) the rotation center Ax. Specifically, one of the wall 213a and the wall 213b (in the present embodiment, for example, the wall 213b) is sandwiched in the axial direction between the two other walls (in the present embodiment, for example, the walls 213a). The walls 213a and 213b can rotate with an angular difference (mutually shifted) in at least part of their rotational ranges. The elastic member 213c (for example, a coil spring) is sandwiched between the wall 213a and the wall 213b to be able to elastically expand and contract substantially in the circumferential direction. The elastic member 213c expands and contracts in the circumferential direction in accordance with the relative rotation angle between the wall 213a and the wall 213b. The elastic member 213c elastically contracts to store torque as compression force and elastically expands to release compression force as torque. In other words, the member 213 can reduce variation in torque through the elastic member 213c. The member 213 rotates integrally with the shaft 203. The member 213 is movably provided in the axial direction. Specifically, one of the wall 213a and the wall 213b (in the example in FIG. 17, the wall 213b) is supported by the shaft 203 through the cylindrical spline coupling 213e. The other of the wall 213a and the wall 213b (in the example in FIG. 17, the wall 213a) is positioned between the walls 202a and 214a and includes a region sandwiched between the walls 202a and 214a. Frictional members 213d are provided on both axial sides of the sandwiched region of the other wall (the wall 213a). The member 213 is provided to be switchably placed at least in the transmitting state in which the member 213 is pressed against the wall 202a of the member 202 in the axial direction of the rotation center Ax to generate friction and transmit torque between the member 213 and the member 202 by the friction, and in the disconnected state in which no torque is transmitted between the member 213 and the member 202.

The member 214 (for example, a first pressure plate) includes the wall 214a. The wall 214a is formed as a ring-like plate and expands in the direction intersecting with (substantially orthogonal to) the rotation center Ax. The member 214 is movably supported by the member 202 in the axial direction. The member 214 is configured to rotate integrally with the member 202.

The member 214 can move in the axial direction between a transmitting position (not illustrated) and a disconnected position (FIG. 17). At the transmitting position, the wall 213a is sandwiched between the wall 202a and the wall 214a through the frictional members 213d. In this state, rotation is transmitted between the wall 202a and the wall 213a (the transmitting state). At the disconnected position, the wall 213a is further separated from both of the wall 202a and the wall 214a than at the transmitting position. In this state, the rotation transmission between the wall 202a and the wall 214a is interrupted (the disconnected state). The frictional members 213d are provided between the wall 202a and the wall 213a and between the wall 213a and the wall 214a. Slipping occurs between the frictional members 213d and the walls 202a and 214a depending on the position of the wall 214a (so-called half-clutch state). Frictional members may also be provided on the walls 202a and 214a.

The member 215 (for example, a first release plate) includes a wall 215a, penetrators 215b, and a connection 215c. The wall 215a has a disk-like shape and expands in the direction intersecting with (substantially orthogonal to) the rotation center Ax. The penetrators 215b are connected (coupled or fixed) with the wall 215a and axially penetrate through openings 202d in the wall 202c of the member 202. The connection 215c has a ring-like shape and is connected (coupled or fixed) with the penetrators 215b.

The member 215 is rotatably supported by the protrusion 251 about the rotation center Ax through the bearing 231. One of rotational parts (for example, a rotational part radially inside) of the bearing 231 is configured not to rotate relative to the protrusion 251, and is movably supported in the axial direction by the protrusion 251. In contrast, the other rotational part (for example, a rotational part radially outside) of the bearing 231 is connected (coupled or fixed) with the connection 215c. In other words, the member 215 is supported to be movable in the axial direction and rotatable about the rotation center Ax by the protrusion 251 through the bearing 231. The member 215 rotates integrally with the member 202 through circumferential drag or friction between the members 202 and 215.

An elastic member 217 (for example, a disc spring or a diaphragm spring) is provided between the member 202 (the wall 202c thereof) and the member 215 (the wall 215a thereof). The elastic member 217 can apply axial force (load) to the member 202 and the member 215. The elastic member 217 can provide direct or indirect pressing force to the member 214 and the member 216.

The member 216 is movably provided relative to the case 205 in the axial direction. The member 216 includes an extension 216a (arm, lever, or wall). The extension 216a extends in the radial direction and has a plate-like and band-like, or a rod-like shape. The extension 216a is connected (coupled or fixed) with a rotational part of the bearing 231 supported by the protrusion 251 (for example, a rotational part radially inside). Thus, the actuator (not illustrated) moves the member 216 in the axial direction, thereby moving the member 215 and the member 214 in the axial direction and switching the state of the rotation transmitting unit 210 among the transmitting state, the half-clutch state, and the disconnected state.

The clutch device 1E includes the members 201 and 202, members 223 to 226, the shaft 204, and the bearing 232 as components involving in the rotation transmission and disconnection by the rotation transmitting unit 220. The members 223 to 226 and the shaft 204 may be all made from, for example, a metal material.

The member 223 (for example, a second clutch disc) is positioned on the opposite side of the member 213 (the other axial side; right side in FIG. 17) from the wall 202a. The member 223 includes walls 223a and 223b, an elastic member 223c, a frictional member 223d, and a spline coupling 223e. The wall 223a has a disk-like shape and expands in the direction intersecting with (substantially orthogonal to) the rotation center Ax. The wall 223b has a disk-like shape and expands in the direction intersecting with (substantially orthogonal to) the rotation center Ax. Specifically, one of the wall 223a and the wall 223b may be sandwiched between the two other walls in the axial direction. The walls 223a and 223b can rotate with an angular difference (mutually shifted) in at least part of their rotational ranges. The elastic member 223c (for example, a coil spring) is sandwiched between the wall 223a and the wall 223b to be able to elastically expand and contract in the circumferential direction. The elastic member 223c expands and contracts in the circumferential direction in accordance with the relative rotation angle between the wall 223a and the wall 223b. The elastic member 223c elastically contracts to store torque as compression force and elastically expands to release compression force as torque. In other words, the member 223 can reduce variation in torque through the elastic member 223c. The member 223 is rotatably provided about the rotation center Ax. The member 223 rotates integrally with the shaft 204. The member 223 is movably provided in the axial direction. Specifically, one of the wall 223a and the wall 223b (in the example in FIG. 17, the wall 223b) is supported by the shaft 204 through the spline coupling 223e. The other of the wall 223a and the wall 223b (in the example in FIG. 17, the wall 223a) is positioned between the walls 202a and 224a and includes a region sandwiched between the walls 202a and 224a. The frictional members 223d are provided on both axial sides of the sandwiched region of the other wall (the wall 223a). The member 223 is provided to be switchably placed at least in the transmitting state in which the member 223 is pressed against the wall 202a of the member 202 in the axial direction of the rotation center Ax to transmit torque between the member 223 and the member 202 through friction, and the disconnected state in which no torque is transmitted between the member 223 and the member 202.

The member 224 (for example, the first pressure plate) is provided between the bearing 232 and the member 223. The member 224 is positioned outside the bearing 232 and the member 223. The member 224 is rotatably provided about the rotation center Ax and movable in the axial direction.

The member 224 includes a wall 224a, penetrators 224b, and a wall 224c. The wall 224a is formed as a ring-like plate, and expands in the direction intersecting with (substantially orthogonal to) the rotation center Ax. The penetrators 224b are connected (coupled or fixed) with the wall 224a, and axially penetrate through openings 202e in the wall 202a of the member 202. The wall 224c has a ring-like shape and is connected (coupled or fixed) with the penetrator 224b. The member 224 is supported by the member 202 to be movable in the axial direction. The member 224 is configured to rotate integrally with the member 202. The member 224 is an exemplary fourth member.

The wall 224c includes protrusions 224e and 224f. The protrusions 224e and 224f are provided on the other axial-side face of the wall 224c. The protrusions 224e and 224f each have a circular shape about the rotation center Ax. The protrusion 224f is positioned more radially inside than the protrusion 224e. The protrusions 224e and 224f are positioned between a radial outer end (edge) and a radial inner end (edge) of the wall 224c. The protrusions 224e and 224f protrude toward an elastic member 235 (the other axial side). The protrusion 224f is an exemplary first support, and the protrusion 224e is an exemplary second support.

The member 224 can move in the axial direction between the transmitting position (not illustrated) and the disconnected position (FIG. 17). At the transmitting position, the wall 223a is sandwiched between the wall 202a and the wall 224a through the frictional members 223d. In this state, rotation is transmitted between the wall 202a and the wall 223a (the transmitting state). At the disconnected position, the wall 223a is further separated from both of the wall 202a and the wall 224a than at the transmitting position. In this state, the rotation transmission between the wall 202a and the wall 224a is interrupted (the disconnected state). The frictional members 223d are provided between the wall 202a and the wall 223a and between the wall 223a and the wall 224a. Slipping occurs between the frictional members 223d and the walls 202a and 224a depending on the position of the wall 224a (so-called half-clutch state). Frictional members may also be provided on the walls 202a and 224a.

The member 225 (for example, a second release plate) is provided between an elastic member 227 and the elastic member 235. The member 225 moves in the axial direction along with the axial motion of the bearing 232. The member 225 is an exemplary fifth member.

The member 225 includes a wall 225a. The wall 225a is positioned on the opposite side of the wall 215a from the wall 202c of the member 202. The wall 225a has a disk-like shape and expands in the direction intersecting with (substantially orthogonal to) the rotation center Ax. The bearing 232 is connected (coupled or fixed) with the radial inner end of the wall 225a.

The member 225 is rotatably supported about the rotation center Ax through the bearing 232 by the connection 215c of the member 215. One of rotational parts (for example, a rotational part radially inside) of the bearing 232 is configured not to rotate relative to the member 215 and movably supported by the member 215. In contrast, the other rotational part (for example, a rotational part radially outside) of the bearing 232 is connected (coupled) with the wall 225a. The member 225 rotates integrally with the member 202 through circumferential drag or friction between the members 202 and 225. In other words, the member 225 is movably, rotatably supported by the member 215 through the bearing 232 in the axial direction.

Protrusions 225e and 225f are provided on the radial outer side of the wall 225a. The protrusion 225f is positioned more radially outside than the protrusion 225e. The protrusion 225e is positioned more radially inside than the protrusion 224f. The protrusion 225e is provided on one axial-side face of the wall 225a and protrudes toward the one axial side. The protrusion 225e contacts with the elastic member 235. The protrusion 225f is provided on the other axial-side face of the wall 225a and protrudes toward the other axial side. The protrusion 225f contacts with the elastic member 227. The protrusion 225e is an exemplary second contact, and the protrusion 225f is an exemplary first contact. The wall 225a is provided with a guide 225g (support). The guide 225g extends from the wall 225a toward the one axial side. The guide 225g is positioned radially inside the circular elastic member 235. The guide 225g is provided in a predetermined area (part) about the rotation center Ax. The guide 225g moves in the radial direction and contacts and supports the elastic member 235 in the radial direction. The guide 225g may has a circular shape about the rotation center Ax.

The elastic member 227 (for example, disc spring, diaphragm spring) is provided between the member 202 (the wall 202c thereof) and the member 225 (the wall 225a thereof). The elastic member 227 can apply axial force (load) to the member 202 and the member 225. The elastic member 227 can provide direct or indirect pressing force to the member 224 and the member 226. The elastic member 227 elastically deforms in the axial direction in accordance with a change in the axial position of the bearing 232, and generates elastic force to press the member 202 and the member 223 against each other. The elastic member 227 is an exemplary first elastic member.

The elastic member 235 (for example, a disc spring) is provided between the member 225 (the wall 225a thereof) and the member 224 (the wall 224c thereof). The elastic member 235 is positioned on the same side of the member 224 as the member 223. The elastic member 235 is positioned outside the member 225 and the member 223. The elastic member 235 can apply axial force (load) to the member 225 and the member 224. The elastic member 235 can provide direct or indirect pressing force to the member 224 and the member 226. The elastic member 235 elastically deforms in the axial direction in accordance with a change in the axial position of the bearing 232 (third member), and generates elastic force against the force of the elastic member 227 applied to the bearing 232 when the bearing 232 moves from the first position to the second position. The elastic member 235 is an exemplary second elastic member.

The member 226 is provided to be movable relative to the case 205 in the axial direction. The member 226 includes an extension 226a (arm, lever, or wall). The extension 226a extends in the radial direction, and has a plate-like and band-like or rod-like shape. The extension 226a is connected (coupled or fixed) with a rotational part of the bearing 232 supported by the member 215 (for example, a rotational part radially inside). Thus, the actuator (not illustrated) moves the member 226 in the axial direction, thereby moving the member 225 and the member 224 in the axial direction and switching the state of the rotation transmitting unit 220 among the transmitting state, the half-clutch state, and the disconnected state. The member 226 may be supported by the protrusion 251 through a bearing (not illustrated) instead of the member 215.

The bearing 232 is provided to be able to transmit axial force to the member 223. Specifically, the bearing 232 can transmit axial force to the member 223 through the member 225, the elastic member 235, and the member 224. The bearing 232 is provided to be movable in the axial direction between the first position (not illustrated) at which the member 202 and the member 223 are in the transmitting state, and the second position (FIG. 17) at which the member 202 and the member 223 are in the disconnected state.

In the present embodiment, along with the axial movement of the bearing 232, the posture of the elastic member 235 changes, and the state of the elastic member 235 supported by the protrusions 224e and 224f of the member 224 changes. The protrusion 224f axially supports the elastic member 235 elastically deformed in the first posture (FIG. 17), but does not support the elastic member 235 elastically deformed in the second posture (not illustrated). In contrast, the protrusion 224e axially supports the elastic member 235 at least in the second posture, but does not axially support the elastic member 235 in the first posture.

In the present embodiment, the elastic member 235 takes the first posture in the first movement interval (movement interval in the axial direction) of the bearing 232, and takes the second posture in the second movement interval closer to the second position of the bearing 232 than the first movement interval. The amount of change in the elastic force of the elastic member 235 relative to the amount of change in the axial position of the bearing 232 in the first movement interval is larger than that in the second movement interval.

The above-described configuration achieves the same effects as those of the first embodiment.

In the present embodiment, the member 224 (fourth member) is positioned outside the bearing 232 (third member) and the member 223 (second member) to be rotatable about the rotation center Ax and movable in the axial direction. The elastic member 235 (the second elastic member) is positioned on the same side of the member 224 as the member 223. Thus, the clutch device 1E as a twin clutch with a relatively simple configuration can be realized.

In the present embodiment, the member 225 (fifth member) includes the protrusion 225f (first contact) to contact with the elastic member 227 (first elastic member), and the protrusion 225e (second contact) to contact with the elastic member 235 (second elastic member). The member 225 is provided between the elastic member 227 and the elastic member 235 to move in the axial direction along with the axial motion of the bearing 232 (third member). The elastic member 235 is positioned outside the member 225 and the member 223. Thus, the clutch device 1E as a twin clutch with a relatively simple configuration can be realized.

### Seventh Embodiment

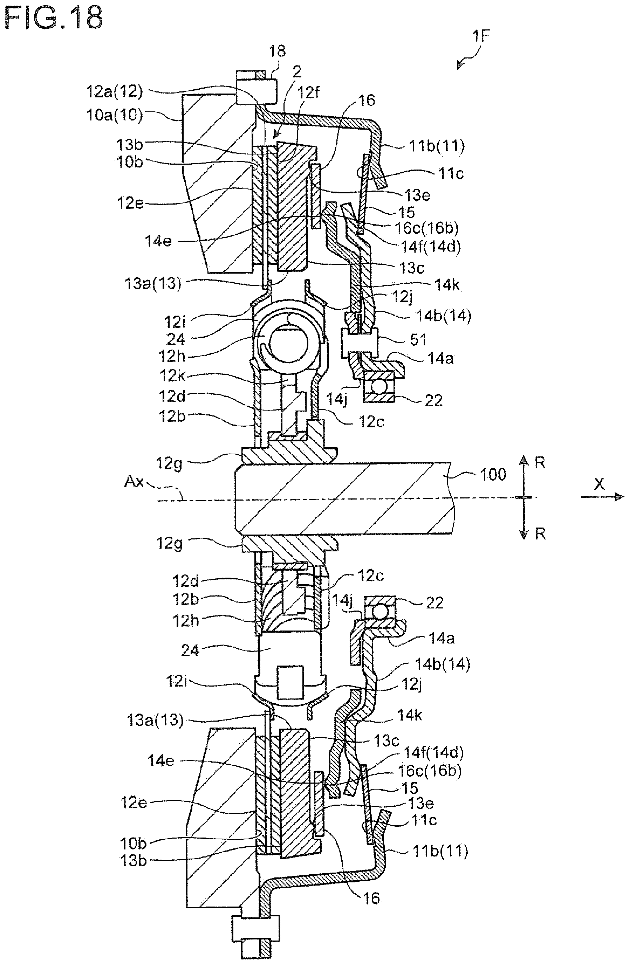

A clutch device 1F according to the present embodiment illustrated in FIG. 18 includes the member 13 and the member 14 which are different from those in the first embodiment.

The member 14 includes a wall 14k in addition to the tube 14a and the wall 14b. The wall 14k is positioned on one axial side of the wall 14b, in other words, closer to the elastic member 16, between the wall 14b and the elastic member 16. The wall 14k has a circular shape about the rotation center Ax. In the present embodiment, the protrusion 14e is provided on the wall 14k. A variable setting unit is provided between the wall 14b and the wall 14k to variably set an axial distance between the wall 14b and the wall 14k. When the position of the member 13 is shifted toward the one axial side due to, for example, abrasion of the frictional members 12e and 12f, the variable setting unit moves the wall 14k toward the one axial side, thereby maintaining a constant distance between the member 13 and the wall 14k. The wall 14k is also called a wedge ring, and the variable setting unit is also called an abrasion follow-up mechanism. In the present embodiment, the bearing 22 is attached to the tube 14a with an attaching member 14j. The attaching member 14j is coupled with the wall 14b with a coupling member 51.

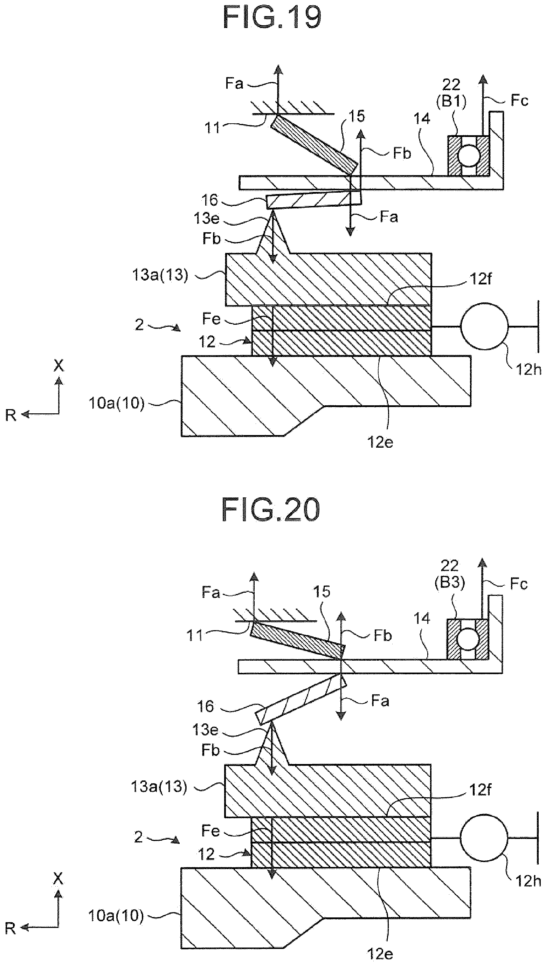

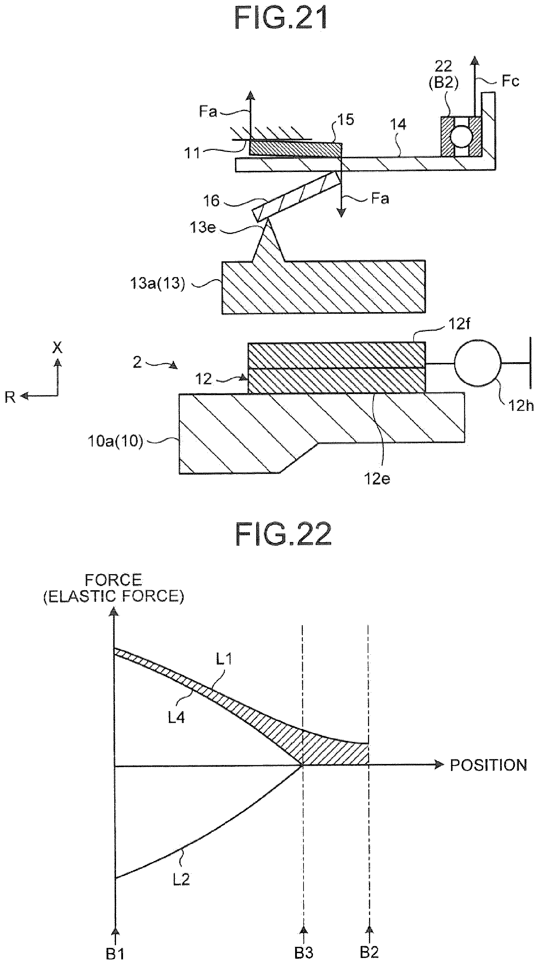

In the present embodiment, the wall 13c of the member 13 is provided with the protrusion 13e but not provided with the protrusion 13f. In the present embodiment, the protrusion 13e supports the elastic member 16 in any of the transmitting state of the rotation transmitting units 2 illustrated in FIG. 19, the slipping state of the rotation transmitting unit 2 illustrated in FIG. 20, and the disconnected state of the rotation transmitting unit 2 illustrated in FIG. 21. In FIGS. 19 to 21, each component is schematically illustrated. In FIGS. 19 to 21, illustration of the wall 14k is omitted.

Similarly to the first embodiment, only one elastic member 16 is provided.

FIGS. 19 to 21 illustrate elastic force Fa of the elastic member 15 and elastic force Fb of the elastic member 16. In the following description, the elastic force of the elastic member 20 is relatively small relative to the elastic forces of the elastic member 15 and the elastic member 16, and thus will be ignored. The drive power Fc of the actuator needed to hold the positions of the member 23 (refer to FIG. 1) and the bearing 22 is expressed by Fc = Fa - Fb. In the drawings, the arrows indicating the elastic forces Fa and Fb and the drive power Fc represent the directions of the forces but not the magnitude of the forces.

As illustrated in FIG. 19, when the member 23 and the bearing 22 are located at the position B1, in other words, in the transmitting state of the rotation transmitting unit 2, the elastic force Fb of the elastic member 16 acts on the one axial side of the member 13. Thus, in the transmitting state of the rotation transmitting unit 2, the elastic force Fb of the elastic member 16 works as the pressing force Fe of the member 13 to the member 12.

In the slipping state of the rotation transmitting unit 2 illustrated in FIG. 20, the elastic force Fb of the elastic member also acts on the one axial side of the member 13. Thus, in the slipping state of the rotation transmitting unit 2, the elastic force Fb of the elastic member 16 works as the pressing force Fe of the member 13 to the member 12.

In the disconnected state of the rotation transmitting unit 2 illustrated in FIG. 21, the members 13 and 12 are separated from each other in the axial direction. Thus, in the disconnected state of the rotation transmitting unit 2, no force of the member 13 acts on the member 12.

FIG. 22 illustrates the magnitude of forces (elastic forces or axial components) acting on the member 14 from the elastic members 15 and 16 in accordance with the positions of the member 23 and the bearing 22. The horizontal and vertical axes in FIG. 22 are the same as those in FIG. 6. Similarly to FIG. 6, in FIG. 22, line L1 represents the force of the elastic member 15 applied to the member 14, and line L2 represents the force of the elastic member 16 applied to the member 14. Line L4 is symmetrical to line L2 with respect to the horizontal axis in FIG. 22. The hatched region in FIG. 22 indicates a difference load on the elastic members 15 and 16, and corresponds to the drive power Fc of the actuator.

As described above, in the present embodiment, the clutch device 1F includes one elastic member 16 as the second elastic member. Thus, similarly to the first embodiment, the clutch device 1F can have a simpler configuration than, for example, the one including multiple second elastic members.

### Eighth Embodiment

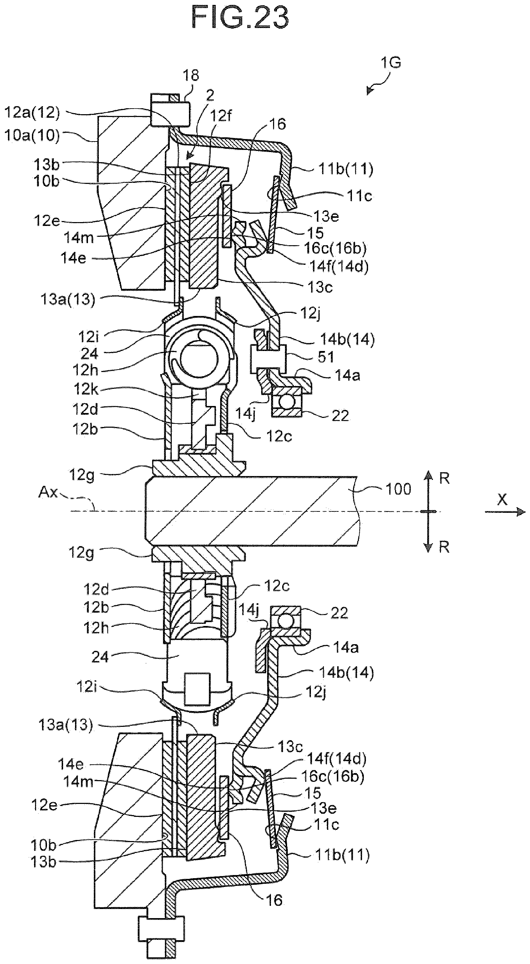

A clutch device 1G according to the present embodiment illustrated in FIG. 23 includes the member 14 different from that in the seventh embodiment.

The member 14 includes the tube 14a and the wall 14b but does not include the wall 14k. The wall 14b is provided with a prong 14m. The prong 14m is provided at a radial outer end of the wall 14b. In the present embodiment, the protrusion 14e is provided on the prong 14m.

Similarly to the first embodiment, only one elastic member 16 is provided.

As described above, in the present embodiment, the clutch device 1G includes one elastic member 16 as the second elastic member. Thus, similarly to the first embodiment, the clutch device 1G can have a simpler configuration than, for example, the one including multiple second elastic members.

### Ninth Embodiment

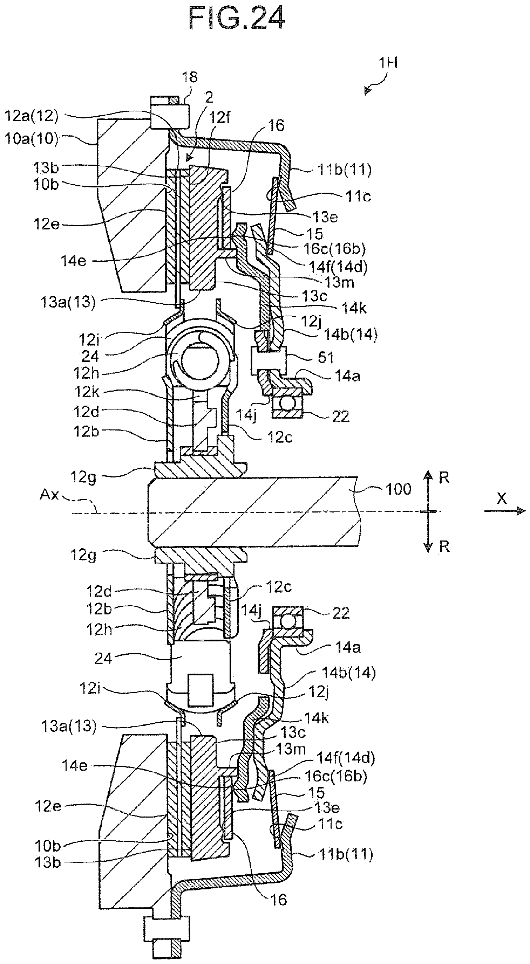

A clutch device 1H according to the present embodiment illustrated in FIG. 24 differs from that in the seventh embodiment in that the member 13 is provided with a contact 13m. In the present embodiment, the contact 13m may be provided to the member 14 in place of the member 13.

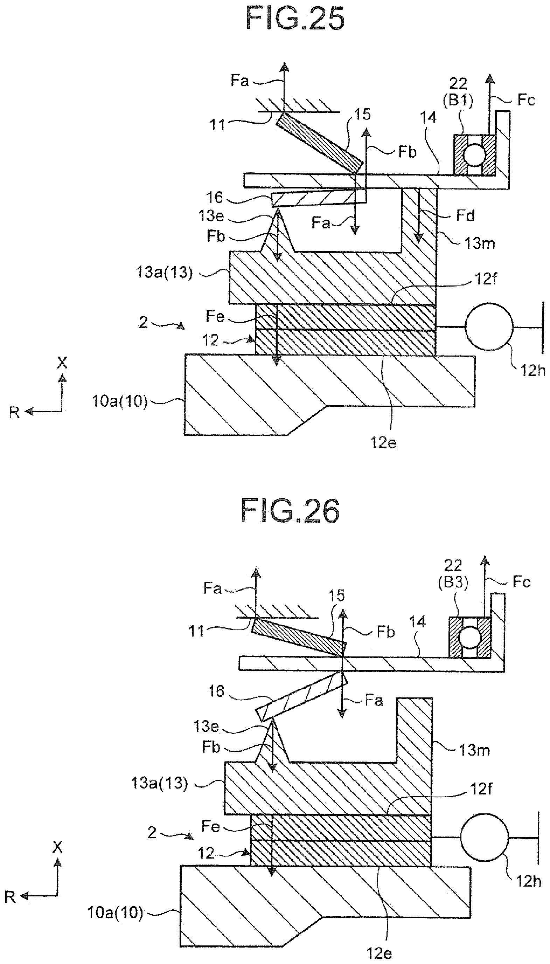

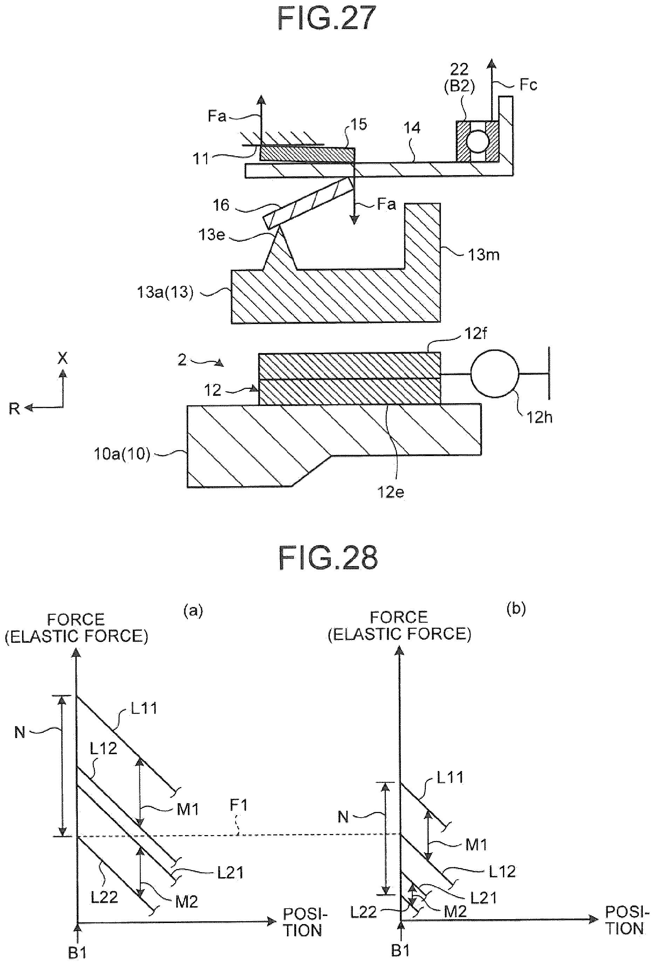

The contact 13m protrudes from the face 13c of the wall 13a of the member 13 toward the other axial side, in other words, toward the member 14. The contact 13m has a circular shape about the rotation center Ax. The contact 13m is positioned more radially inside than the protrusion 13e. The contact 13m can contact with and separate from the member 14. Specifically, in the present embodiment, the contact 13m can contact with and separate from the wall 14k. As illustrated in FIG. 25, the contact 13m is in contact with the member 14 in the axial direction when the bearing 22 and the member 23 (not illustrated in FIG. 25) are located at the position B1 (the first position). As illustrated in FIGS. 26 and 27, the contact 13m is separated from the member 14 in the axial direction when the bearing 22 and the member 23 (not illustrated in FIGS. 26 and 27) are positioned between the position B1 (the first position) and the position B2 (the second position). The contact 13m axially contacts and supports the member 14. The contact 13m is also called a stopper. In the present embodiment, the member 13 is an exemplary seventh member, and the member 14 is an exemplary sixth member. In FIGS. 25 to 27, each component is schematically illustrated. In FIGS. 25 to 27, illustration of the wall 14k is omitted.

As illustrated in FIG. 25, when the bearing 22 and the member 23 are located at the position B1, in other words, in the transmitting state of the rotation transmitting unit 2, the contact 13m and the member 14 are in contact with each other in the axial direction, and thus, the elastic force Fb of the elastic member 16 and a pressing force Fd of the member 14 act on the one axial side of the member 13. It is seen from FIG. 25 that the pressing force Fd = Fa - Fb holds true. Thus, pressing force Fe of the member 13 applied to the member 12 is expressed by Fe = Fb + Fd, and thus Fe = Fb + (Fa - Fb) = Fa holds. In other words, in the transmitting state of the rotation transmitting unit 2, the elastic force Fa of the elastic member 15 works as the pressing force Fe of the member 13 applied to the member 12 .

In the slipping state of the rotation transmitting unit 2 illustrated in FIG. 26, the contact 13m and the member 14 are separated from each other in the axial direction, and thus, the elastic force Fb of the elastic member acts on the one axial side of the member 13. In other words, in the slipping state of the rotation transmitting unit 2, the elastic force Fb of the elastic member 16 works as the pressing force Fe of the member 13 applied to the member 12.

In the disconnected state of the rotation transmitting unit 2 illustrated in FIG. 27, the members 13 and 12 are separated from each other in the axial direction. Thus, in the disconnected state of the rotation transmitting unit 2, no force of the member 13 acts on the member 12.

FIG. 28 schematically illustrates the magnitude of the elastic forces of the elastic members 15 and 16 in accordance with the position of the member 23. Specifically, FIG. 28(a) illustrates a graph with no contact 13m provided (for example, the seventh embodiment), and FIG. 28(b) illustrates a graph of the present embodiment with the contact 13m provided. In each graph, the vertical axis represents the magnitude (absolute values) of the elastic forces, and the horizontal axis represents the axial positions of the bearing 22 and the member 23. In each graph, the origin of the horizontal axis is at the position B1 of the bearing 22 and the member 23 when the rotation transmitting unit 2 is in the transmitting state, and is at the positions of the bearing 22 and the member 23 when no operation is performed on the bearing 22 and the member 23. The elastic forces of the elastic members 15 and 16 may vary from a predetermined elastic force due to, for example, manufacturing variation. In FIG. 28, line L11 indicates a maximum variation in the elastic force of the elastic member 15, and line L12 indicates a minimum variation in the elastic force of the elastic member 15, when a predetermined variation M1 occurs in the elastic force of the elastic member 15. In FIG. 28, line L21 indicates a maximum variation in the elastic force of the elastic member 16, and line L22 indicates a minimum variation in the elastic force of the elastic member 16, when a predetermined variation M2 occurs in the elastic force of the elastic member 16.

As illustrated in FIG. 19 according to the seventh embodiment, with the elastic member 16 provided between the member 13 and the member 14, the elastic force Fb of the elastic member 16 works as pressing force to the member 12 toward the member 10 through the member 13, for example, when the rotation transmitting unit 2 is in the transmitting state and the bearing 22 and the member 23 are located at the position B1. Thus, for example, according to the seventh embodiment, to place the members 12 and 10 in the transmitting state in the case of no drive power of the actuator, the elastic forces of the elastic members 15 and 16 need to have a relation as illustrated in FIG. 28(a). In other words, at the position B1, a required pressing load F1 as pressing force to the member 12 against the member 10 needs to be set to a minimum variation value of the elastic force of the elastic member 16 (line L22), and the elastic force of the elastic member 15 needs to be set to be larger than the elastic force of the elastic member 16. This results in a relatively large difference elastic force N that is a difference between the maximum variation value of the elastic force of the elastic member 15 (line L11) and the minimum variation value of the elastic force of the elastic member 16 (line L22).

In contrast, with the contact 13m provided according to the present embodiment, as described above, the elastic force Fa of the elastic member 15 works as the pressing force Fe of the member 13 to the member 12, for example, in the transmitting state of the rotation transmitting unit 2. Thus, as illustrated in FIG. 28(b), at the position B1, the required pressing load F1 has to be set to the minimum variation value of the elastic force of the elastic member 15 (line L12). With this setting, the minimum variation value of the elastic force of the elastic member 15 (line L12) can be reduced from that in FIG. 28(a). Thereby, a value of the predetermined elastic force of the elastic member 15 as a reference variation can be reduced. Accordingly, a value of the predetermined elastic force of the elastic member 16 as a reference variation can be reduced.

Variation represents, for example, a ratio of increase and decrease from a reference value, so that the smaller the reference value, the smaller the variations M1 and M2. That is, the variations M1 and M2 of the elastic forces decrease as the reference values of the predetermined elastic forces decrease. Thus, as described above, according to the present embodiment, the predetermined elastic forces of the elastic members 15 and 16 as reference variations have smaller values, hence the variations M1 and M2 of the elastic members 15 and 16 are reduced. This results in a relatively small difference elastic force N between the maximum variation value of the elastic force of the elastic member 15 (line L11) and the minimum variation value of the elastic force of the elastic member 16 (line L22).

As described above, in the present embodiment, the clutch device 1H includes the member 14 and the member 13. The member 14 is provided between the elastic member 15 and the elastic member 16, and moves in the axial direction integrally with the bearing 22 and the member 23. The member 13 is provided between the member 14 and the member 12. The member 13 contacts with the member 14 in the axial direction when the bearing 22 and the member 23 are located at the position B1, and is separated from the member 14 in the axial direction when the member 23 and the bearing 22 are located between the position B1 and the position B2. Thus, for example, the elastic force of the elastic member 15 can be reduced. Thereby, the drive power of the actuator can be reduced.

### Tenth Embodiment

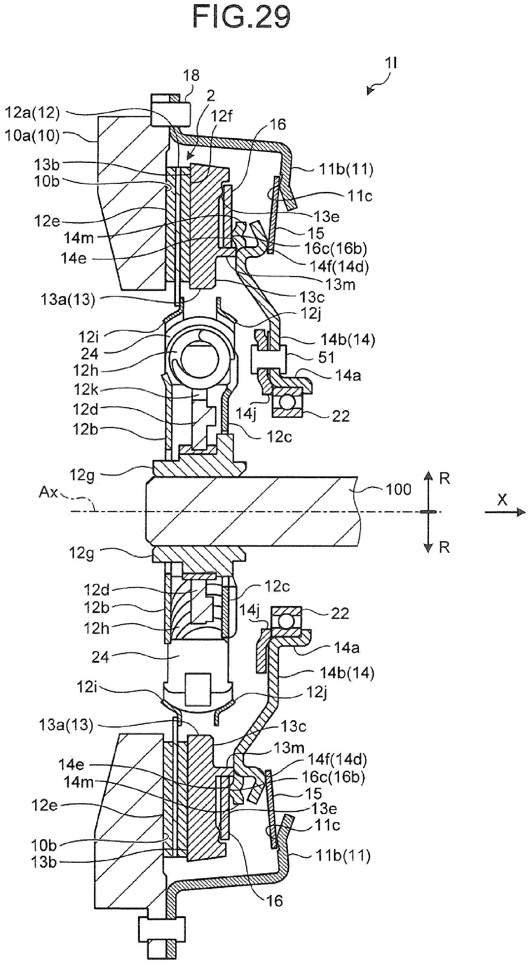

A clutch device 11 according to the present embodiment illustrated in FIG. 29 differs from that of the ninth embodiment in the member 14. Similarly to the eighth embodiment, the member 14 includes the tube 14a and the wall 14b, but does not include the wall 14k. In the present embodiment, the contact 13m of the member 13 can contact and separate from the wall 14b and the prong 14m of the member 14. In the present embodiment, the contact 13m may be provided to the member 14 in place of the member 13.

The present embodiment described above can achieve the same effects as those of the ninth embodiment.

The exemplary embodiments of the present invention are described above, but the above-described embodiments are merely exemplary and are not intended to limit the scope of the present invention. The above-described embodiments can be achieved in other various configurations, and various kinds of omissions, replacements, combinations, and modifications can be performed without departing from the gist of the invention. Specifications (structure, kind, direction, shape, magnitude, length, width, thickness, height, number, arrangement, position, and material, for example) such as configuration, shape, and display element may be changed as appropriate.

### EXPLANATIONS OF LETTERS OR NUMERALS

1, 1A, 1B, 1C, 1D, 1E, 1F, 1G, 1H, 11 Clutch device
10 Member (first member)
11 Member (cover)
12 Member (second member)
13 Member (fourth member, seventh member)
13d Protrusion (second support)
13e Protrusion (second support)
13f Protrusion (first support)
14 Member (fifth member, sixth member)
14e Protrusion (second contact)
14f Protrusion (first contact)
15, 31 Elastic member (first elastic member)
16 Elastic member (second elastic member)
16g Disc spring
16h Plate spring
16i Plate (first plate)
16j Plate (second plate)
20 Elastic member (third elastic member)
22 Bearing (third member)
23 Member (third member)
202 Member (first member)
224 Member (fourth member)
224e Protrusion (second support)
224f Protrusion (first support)
225 Member (fifth member)
225e Protrusion (second contact)
225f Protrusion (first contact)
227 Elastic member (first elastic member)
235 Elastic member (second elastic member)
B1 Position (first position)
B2 Position (second position)
C1 Posture (first posture)
C3 Posture (second posture)
D1 Movement interval (first movement interval)
D2 Movement interval (second movement interval)

## Claims

1. A clutch device comprising:
a first member rotatably provided about a rotation center;
a second member rotatably provided about the rotation center and switchably placed in a transmitting state and a disconnected state, the transmitting state in which the second member is pressed against the first member at least in an axial direction of the rotation center to transmit torque between the first and second members by friction, the disconnected state in which no torque is transmitted between the first member and the second member;
a third member provided to be able to transmit force to the second member in the axial direction and movable in the axial direction between a first position and a second position, the first position at which the first member and the second member are placed in the transmitting state, the second position at which the first member and the second member are placed in the disconnected state;
a cover that covers the first member and rotates integrally with the first member;
a first elastic member configured to elastically deform in the axial direction in accordance with a change in the axial position of the third member and generate elastic force in a direction to press the first member and second member against each other; and
a single second elastic member provided between the first member and the cover to elastically deform in the axial direction in accordance with a change in the axial position of the third member and generate elastic force against force of the first elastic member to the third member when the third member moves from the first position toward the second position.

2. The clutch device according to claim 1, further comprising a fourth member including a first support and a second support, the first support configured to support the second elastic member in the axial direction when the second elastic member is elastically deformed in a first posture and not to support the second elastic member when the second elastic member is elastically deformed in a second posture, the second support configured to support the second elastic member in the axial direction when at least the second elastic member is in the second posture.

3. The clutch device according to claim 2, wherein
the second elastic member takes the first posture in a first movement interval of the third member, and takes a second posture in a second movement interval closer to the second position than the first movement interval, and
an amount of change in the elastic force of the second elastic member relative to an amount of change in the axial position of the third member in the first movement interval is larger than the amount of change in the elastic force of the second elastic member relative to the amount of change in the axial position of the third member in the second movement interval.

4. The clutch device according to claim 2 or 3, wherein
the fourth member is provided between the third member and the second member to be rotatable about the rotation center and movable in the axial direction, and
the second elastic member is positioned opposite the second member with respect to the fourth member in the axial direction.

5. The clutch device according to any one of claims 1 to 4, further comprising a fifth member including a first contact to contact with the first elastic member and a second contact to contact with the second elastic member, the fifth member being provided between the first elastic member and the second elastic member to move in the axial direction along with an axial motion of the third member, wherein
the second elastic member is provided between the fifth member and the second member.

6. The clutch device according to claim 2 or 3, wherein
the fourth member is positioned outside the third member and the second member and provided to be rotatable about the rotation center and movable in the axial direction, and
the second elastic member is positioned on the same side of the fourth member as the second member.

7. The clutch device according to claim 1, 2, 3 or 6, further comprising a fifth member including a first contact to contact with the first elastic member and a second contact to contact with the second elastic member, the fifth member being provided between the first elastic member and the second elastic member and configured to move in the axial direction along with an axial motion of the third member, wherein
the second elastic member is positioned outside the fifth member and the second member.

8. The clutch device according to any one of claims 1 to 7, wherein the second elastic member is a disc spring of a circular shape about the rotation center.

9. The clutch device according to any one of claims 1 to 7, wherein the second elastic member includes a disc spring of a circular shape about the rotation center, and a plate spring extending from the disc spring in a radial direction of the rotation center.

10. The clutch device according to claim 9, wherein the plate spring includes a first plate extending from the disc spring in the radial direction of the rotation center, and a second plate extending from the first plate in a circumferential direction of the rotation center.

11. The clutch device according to any one of claims 1 to 10, wherein the first support has a circular shape about the rotation center.

12. The clutch device according to any one of claims 1 to 11, further comprising a third elastic member different from the second elastic member, configured to generate elastic force against force of the first elastic member to the third member in the disconnected state.

13. The clutch device according to any one of claims 1 to 12, further comprising:
a sixth member provided between the first elastic member and the second elastic member and configured to move in the axial direction integrally with the third member; and
a seventh member provided between the sixth member and the second member, and configured to be in contact with the sixth member in the axial direction when the third member is located at the first position, and to be separated from the sixth member in the axial direction when the third member is located between the first position and the second position.
